(19) Europäisches Patentamt
European Patent Office
Office européen des brevets

(11) Veröffentlichungsnummer: **0 480 306 B1**

(12) **EUROPÄISCHE PATENTSCHRIFT**

(45) Veröffentlichungstag der Patentschrift: **30.08.95**

(51) Int. Cl.6: **A01N 47/36**, //(A01N47/36, 47:36)

(21) Anmeldenummer: **91116850.8**

(22) Anmeldetag: **02.10.91**

(54) **Synergistische herbizide Mittel.**

(30) Priorität: **08.10.90 DE 4031799**

(43) Veröffentlichungstag der Anmeldung:
**15.04.92 Patentblatt 92/16**

(45) Bekanntmachung des Hinweises auf die Patenterteilung:
**30.08.95 Patentblatt 95/35**

(84) Benannte Vertragsstaaten:
**AT CH DE DK ES FR GB IT LI NL**

(56) Entgegenhaltungen:
**EP-A- 0 324 302**
**EP-A- 0 388 771**
**WO-A-89/01289**
**US-A- 4 645 527**

(73) Patentinhaber: **Hoechst Schering AgrEvo GmbH**
**Gerichtstrasse 27**
**D-13342 Berlin (DE)**

(72) Erfinder: **Hacker, Erwin, Dr.**
**Margarethenstrasse 16**
**W-6203 Hochheim am Main (DE)**
Erfinder: **Stübler, Hermann, Dr.**
**Berliner Strasse 56**
**W-6067 Trebur (DE)**
Erfinder: **Bauer, Klaus, Dr.**
**Doorner Strasse 53D**
**W-6450 Hanau (DE)**
Erfinder: **Bieringer, Hermann, Dr.**
**Eichenweg 26**
**W-6239 Eppstein/Taunus (DE)**
Erfinder: **Kehne, Heinz, Dr.**
**Iltisweg 7A**
**W-6238 Hofheim am Taunus (DE)**

EP 0 480 306 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung liegt auf dem Gebiet der Pflanzenschutzmittel, die gegen monokotyle und dikotyle Unkräuter eingesetzt werden können.

In EP-A-0 342 569, EP-A-0 342 568 und EP-A-0 388 771 werden heterocyclisch substituierte Phenoxysulfonylharnstoffe beschrieben, mit denen ein breites Spektrum mono- und dikotyler Unkräuter bekämpft werden kann. Sie können sowohl als Bodenherbizid als auch übers Blatt eingesetzt werden und zeigen besonders auch hohe Selektivität in monokotylen Kulturpflanzen wie Getreide, Mais und Sorghum, aber auch in Reis, insbesondere in Wasserreis (paddy).

Sowohl im Reis wie auch in anderen Kulturen existieren jedoch eine Reihe wirtschaftlich sehr wichtiger monokotyler Unkräuter wie z. B. Cyperus rotundus, Cyperus esculentus, Cyperus serotinus, Eleocharis kuroguwai und viele andere, die mit den erwähnten Verbindungen alleine nicht in optimaler Weise zu bekämpfen sind.

Überraschenderweise wurden nun einige herbizide Wirkstoffe gefunden, die bei gemeinsamer Anwendung mit den obengenannten Verbindungen ausgesprochen synergistische Eigenschaften hinsichtlich der Effektivität gegen Unkräuter haben.

Gegenstand der vorliegenden Erfindung sind herbizide Mittel, gekennzeichnet durch einen wirksamen Gehalt an

A) Verbindungen der allgemeinen Formel (I) oder deren Salzen

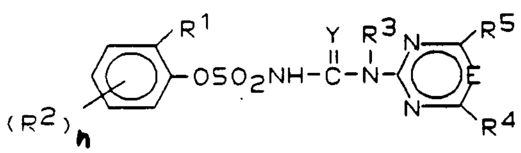

(I)

worin

$a_1$)

- $R^1$ Ethoxy, Propoxy oder Isopropoxy und
- $R^2$ Halogen, $NO_2$, $CF_3$, CN, $C_1$-$C_4$-Alkyl, $C_1$-$C_4$-Alkoxy, $C_1$-$C_4$-Alkylthio oder ($C_1$-$C_4$-Alkoxy)-carbonyl und
- n 0, 1, 2 oder 3 oder

$a_2$)

- $R^1$ gegebenenfalls ungesättigtes $C_1$-$C_8$-Alkoxy, das substitutiert ist durch Halogen, gegebenenfalls ungesättigtes $C_1$-$C_6$-Alkoxy, einen Rest der Formel ($C_1$-$C_6$-Alkyl)-S-, ($C_1$-$C_6$-Alkyl)-SO-, ($C_1$-$C_6$-Alkyl)-$SO_2$-, ($C_1$-$C_6$-Alkyl)-O-CO-, $NO_2$, CN oder Phenyl; ferner $C_2$-$C_8$-Alkenyloxy oder -Alkinyloxy und
- $R^2$ gesättigtes oder ungesättigtes $C_1$-$C_8$-Alkyl, Phenyl, Phenoxy, $C_1$-$C_4$-Alkoxy, $C_1$-$C_4$-Alkylthio, ($C_1$-$C_4$-Alkoxy)-carbonyl, wobei alle vorstehende Reste für $R^2$ durch Halogen, $C_1$-$C_4$-Alkoxy oder $C_1$-$C_4$-Alkylthio substituiert sein können, oder Halogen, $NO_2$, $C_1$-$C_4$-Alkylsulfonyl oder -sulfinyl und
- n 0, 1, 2 oder 3 oder

$a_3$)

- $R^1$ $C_1$-$C_8$-Alkoxy und
- $R^2$ $C_2$-$C_8$-Alkenyl oder -Alkinyl, Phenyl oder Phenoxy, wobei die genannten Reste für $R^2$ unsubstituiert oder durch Halogen, $C_1$-$C_4$-Alkoxy oder -Alkylthio substituiert sind, oder $C_1$-$C_4$-Alkylsulfonyl oder -Alkylsulfinyl und
- n 1, 2 oder 3 oder

$a_4$)

- $R^1$ - jeweils in 2-Stellung am Phenylrest - Halogen, Methoxy, Ethyl oder Propyl,
- $R^2$ ($C_1$-$C_4$-Alkoxy)-carbonyl in 6-Stellung im Phenylrest und
- n 1

sowie in allen Fällen $a_1$)-$a_4$)

- $R^3$ Wasserstoff, gesättigtes oder ungesättigtes $C_1$-$C_8$-Alkyl oder $C_1$-$C_4$-Alkoxy,
- $R^4$, $R^5$ unabhängig voneinander Wasserstoff, Halogen, $C_1$-$C_4$-Alkyl, $C_1$-$C_4$-Alkoxy, $C_1$-$C_4$-Alkylthio, wobei die letztgenannten drei Reste unsubstituiert oder durch Halogen, $C_1$-$C_4$-Alkoxy oder $C_1$-$C_4$-Alkylthio substituiert sind,

Y O oder S und

E CH oder N

bedeuten,

in Kombination mit

B) einer oder mehreren Verbindung(en) aus der Gruppe, welche die Verbindungen

B1) Pyrazosulfuron-ethyl (NC 311) der Formel

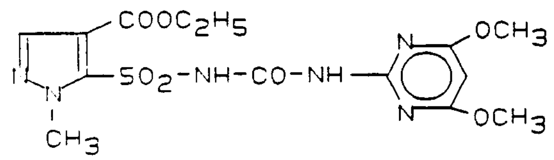

(B1)

B2) Bensulfuron-methyl der Formel

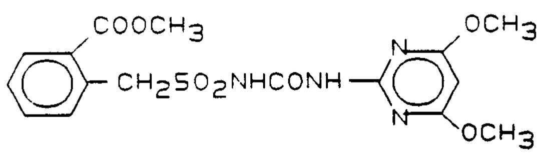

(B2)

B3) Amidosulfuron der Formel

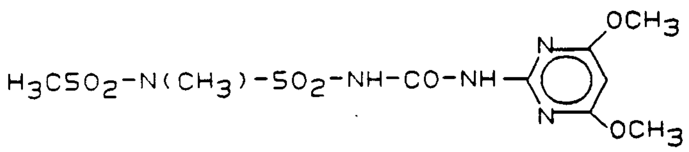

(B3)

B4) Imazosulfuron (TH 913) der Formel

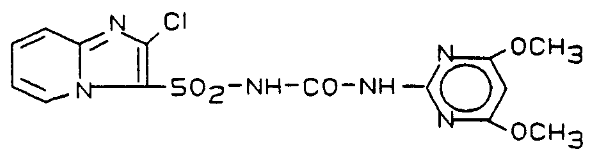

(B4)

B5) Dimetrasulfuron (Cinosulfuron) der Formel

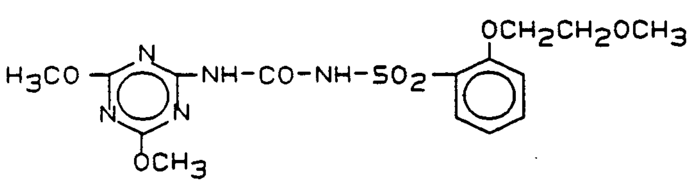

(B5)

und

B6) Metsulfuron-methyl (DPX-T 6376) der Formel

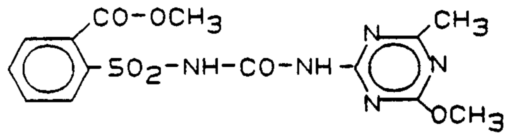

(B6)

enthält.

Die Verbindungen A (Verbindungen der Formel I) sind aus den anfangs genannten deutschen Patentanmeldungen bekannt.

Die Verbindung Pyrazosulfuron-ethyl ist bekannt aus Japan Pesticide Information No. 55 (1989), Seiten 17 bis 20 und aus "Farm Chemicals Handbook '90", Meister Publishing Company, Willoughby, Ohio, USA.

Bensulfuron-methyl ist bekannt aus Publikationen von G.S. Peudpaichit et al. als DPX-F 5384 in Asian-Pacific Weed Science Society, Seiten 114 bis 122 und von S. Tokeda et al. (ebendort, Seiten 156 bis 161) und in dem genannten "Farm Chemicals Handbook '90".

Amidosulfuron ist bekannt aus E. Hacker et al. in Z. Pfl. Krankh. Pfl.Schutz, Sonderh. XII, Seiten 489 bis 497 (1990), als HOE 75032 bekannt.

Imazosulfuron (TH 913) ist aus EP-A-0 238 070 bekannt.

Dimetrasulfuron (Cinosulfuron) ist aus British Crop Prot. Conf. (Weeds) 1987 bekannt.

Metsulfuron-methyl ist beschrieben in "The Pesticide Manual", British Crop Protection Council, 8th Ed., Seite 575.

Von besonderem Interesse sind erfindungsgemäße herbizide Mittel mit Verbindungen der genannten Formel (I) oder deren Salzen, worin

$a_1$)

- $R^1$ Ethoxy, Propoxy oder Isopropoxy und
- $R^2$ in Position 6 orientiert ist und die obengenannte Bedeutung hat, und
- n 0 oder 1 oder

$a_2$)

- $R^1$ gegebenenfalls ungesättigtes $C_1$-$C_4$-Alkoxy, das substituiert ist durch Halogen, $C_1$-$C_4$-Alkoxy, $C_1$-$C_4$-Alkylthio oder -sulfinyl oder -sulfonyl, ($C_1$-$C_4$-Alkoxy)-carbonyl, $NO_2$, CN oder Phenyl; ferner $C_2$-$C_5$-Alkenyloxy oder $C_2$-$C_4$-Alkinyloxy und
- $R^2$ $C_1$-$C_4$-Alkyl, $C_2$-$C_5$-Alkenyl, ($C_1$-$C_4$-Alkoxy)-carbonyl $C_1$-$C_4$-Alkoxy oder $C_1$-$C_4$-Alkylthio, die wie oben angegeben substituiert sein können, oder Halogen und
- n 0 oder 1 oder

$a_3$)

- $R^1$ Methoxy, Ethyl oder Propyl und
- $R^2$ 6-Methoxycarbonyl oder 6-Ethoxycarbonyl und
- n 1 sowie

in allen Fällen $a_1$) - $a_3$)

- $R^3$ Wasserstoff, $C_1$-$C_4$-Alkyl, insbesondere Wasserstoff oder Methyl,
- $R^4$, $R^5$ Halogen, $C_1$-$C_4$-Alkyl, $C_1$-$C_4$-Alkoxy oder $C_1$-$C_4$-Alkylthio, wobei die letztgenannten 3 Reste unsubstituiert oder durch Halogen, $C_1$-$C_4$-Alkoxy oder $C_1$-$C_4$-Alkylthio substituiert sind,
- Y O oder S, insbesondere O,
- E CH oder N, insbesondere CH,

bedeuten.

Gesättigtes oder ungesättigtes Alkyl und Alkoxy bedeutet entsprechend geradkettiges oder verzweigtes Alkyl bzw. Alkoxy; Halogen bedeutet F, Cl, Br und J, vorzugsweise F und Cl.

Die Verbindungen der Formel (I) können Salze bilden, bei denen der Wasserstoff der -$SO_2$-NH-Gruppe durch ein für die Landwirtschaft geeignetes Kation ersetzt wird. Diese Salze sind im allgemeinen Metall-, insbesondere Alkali-, Erdalkali-, gegebenenfalls alkylierte Ammoniumsalze oder Salze anderer organischer Amine.

Bei den genannten Formeln für die Verbindungen A und B wurde die Stereochemie nicht im einzelnen angegeben. Sofern Stereoisomere vorkommen können, sind mit den Formeln auch alle geometrischen Isomeren, Enantiomeren und Diastereomeren sowie deren Gemische umfaßt.

Bevorzugte herbizide Mittel enthalten als Verbindungen A ein oder mehrere Verbindungen der Formeln A1, A2 und A3, wobei die Formeln folgendes bedeuten:

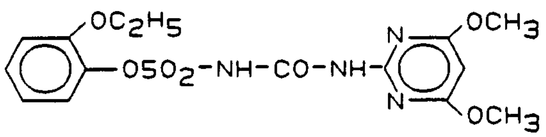

(A1)

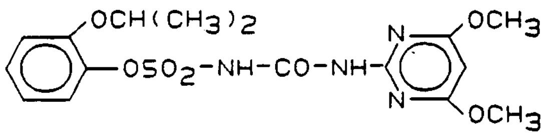

(A2)

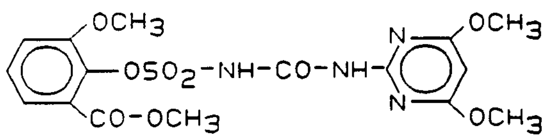

(A3)

Die erfindungsgemäßen herbiziden Mittel weisen eine ausgezeichnete herbizide Wirksamkeit gegen ein breites Spektrum wirtschaftlich wichtiger mono- und dikotyler Schadpflanzen auf. Auch schwer bekämpfbare perennierende Unkräuter, die aus Rhizomen, Wurzelstöcken oder anderen Dauerorganen austreiben, werden durch die Wirkstoffkombinationen gut erfaßt. Dabei ist es gleichgültig, ob die Substanzen im Vorsaat-, Vorauflauf- oder Nachauflaufverfahren ausgebracht werden. Im einzelnen seien beispielhaft einige Vertreter der mono- und dikotylen Unkrautflora genannt, die durch die erfindungsgemäßen Mittel kontrolliert werden können, ohne daß durch die Nennung eine Beschränkung auf bestimmte Arten erfolgen soll.

Auf der Seite der monokotylen Unkrautarten werden z. B. Echinochloa, Digitaria, Setaria etc. sowie Cyperusarten, auch ausdauernde Cyperusarten gut erfaßt.

Bei dikotylen Unkrautarten erstreckt sich das Wirkungsspektrum auf Galium, Viola, Veronica, Lamium, Chenopodium, Stellaria, Amaranthus, Sinapis, Ipomoea, Matricaria, Polygonum, Abutilon, Sida etc. auf der annuellen Seite sowie Convolvulus, Cirsium, Rumex, Artemisia etc. bei den perennierenden Unkräutern.

Unter den spezifischen Kulturbedingungen im Reis vorkommende monokotyle und dikotyle Unkräuter wie z. B. Sagittaria, Alisma, Eleocharis, Scirpus, Cyperus etc. werden von den erfindungsgemäßen Wirkstoffkombinationen ebenfalls hervorragend bekämpft.

Werden die erfindungsgemäßen herbiziden Mittel vor dem Keimen auf die Erdoberfläche appliziert oder ins bewässerte Reisfeld gestreut oder gegossen, so wird entweder das Auflaufen der Unkrautkeimlinge vollständig verhindert, oder die Unkräuter wachsen bis zum Keimblattstadium heran, stellen jedoch dann ihr Wachstum ein und sterben schließlich nach Ablauf von drei bis vier Wochen vollkommen ab.

Bei Applikation der Wirkstoffkombinationen auf die grünen Pflanzenteile oder ins bewässerte Reisfeld im Nachauflaufverfahren tritt ebenfalls sehr rasch nach der Behandlung ein drastischer Wachstumsstop ein, und die Unkrautpflanzen bleiben in dem zum Applikationszeitpunkt vorhandenen Wuchsstadium stehen oder sterben nach einer gewissen Zeit mehr oder weniger schnell ab, so daß auf diese Weise eine für die Kulturpflanzen schädliche Unkrautkonkurrenz sehr früh und nachhaltig durch den Einsatz der neuen erfindungsgemäßen Mittel beseitigt werden kann.

Obgleich die erfindungsgemäßen Mittel eine ausgezeichnete herbizide Aktivität gegenüber mono- und dikotylen Unkräutern aufweisen, werden Kulturpflanzen wirtschaftlich bedeutender Kulturen wie z. B. Weizen, Gerste, Mais und Reis nur unwesentlich oder gar nicht geschädigt. Die Mittel eignen sich aus diesen Gründen sehr gut zur selektiven Bekämpfung von unerwünschtem Pflanzenwuchs in landwirtschaftlichen Nutzpflanzungen.

Mit den erfindungsgemäßen Wirkstoffkombinationen wird z. B. eine herbizide Wirkung erreicht, die über das hinausgeht, was als additive Wirkung der Einzelkomponenten zu erwarten gewesen ist. Solche Wirkungssteigerungen erlauben es, die Einsatzmengen der einzelnen Wirkstoffe erheblich zu reduzieren. Es wurden auch Wirkungsvorteile der Art gefunden, daß entweder die Dauerwirkung der Kombinationen verbessert wird oder eine Beschleunigung der Wirkungsgeschwindigkeit zu beobachten ist. Solche Eigenschaften sind deshalb neue, wirtschaftlich fortschrittliche Erfindungen, die dem Anwender erhebliche Vorteile bei der praktischen Unkrautbekämpfung bieten, indem er Unkräuter billiger oder rascher oder dauerhafter bekämpfen kann und dadurch in einem Kulturpflanzenbestand mehr Ertrag erntet.

Ferner wurde gefunden, daß bei einer Reihe der Wirkstoffkombinationen eine Safener- oder Antidotwirkung ausgeprägt vorhanden ist, d. h. daß phytotoxische Nebenwirkungen der verwendeten Wirkstoffe bei

Kulturpflanzen, wie z. B. dem Reis, herabgesetzt oder gänzlich vermieden werden.

Die Mischungsverhältnisse A : B können innerhalb weiter Grenzen schwanken und liegen in der Regel zwischen 1 : 0,1 bis 1 : 10. Die Wahl des Mischungsverhältnisses ist z. B. abhängig vom Mischungspartner, Entwicklungsstadium der Unkräuter, Unkrautspektrum und Klimabedingungen.

Vorzugsweise werden Mischungsverhältnisse von 1 : 0,25 bis 1 : 4 angewendet. Die Aufwandmengen des Herbizids A in den Wirkstoffmischungen liegen bevorzugt zwischen 5 und 50 g/ha, die Aufwandmengen von B zwischen 5 g und 290 g/ha.

Die erfindungsgemäßen Wirkstoffkombinationen können sowohl als Mischformulierungen der beiden Komponenten vorliegen, die dann in üblicher Weise mit Wasser verdünnt zur Anwendung gebracht werden, oder als sogenannte Tankmischungen durch gemeinsame Verdünnung der getrennt formulierten Komponenten mit Wasser hergestellt werden.

Die Verbindungen A und B oder deren Kombinationen können auf verschiedene Art formuliert werden, je nachdem welche biologischen und/oder chemisch-physikalischen Parameter vorgegeben sind. Als Formulierungsmöglichkeiten kommen beispielsweise in Frage: Spritzpulver (WP), emulgierbare Konzentrate (EC), wäßrige Lösungen (SL), Emulsionen (EW) wie Öl-in Wasser- und Wasser-in-Öl-Emulsionen, versprühbare Lösungen oder Emulsionen, Dispersionen auf Öl- oder Wasserbasis, Suspoemulsionen, Stäubemittel (DP), Beizmittel, Granulate zur Boden- oder Streuapplikation oder wasserdispergierbare Granulate (WG), ULV-Formulierungen, Mikrokapseln oder Wachse.

Diese einzelnen Formulierungstypen sind im Prinzip bekannt und werden beispielsweise beschrieben in: Winnacker-Küchler, "Chemische Technologie", Band 7, C. Hauser Verlag München, 4. Aufl. 1986; van Valkenburg, "Pesticides Formulations", Marcel Dekker N. Y., 2nd Ed. 1972-73; K. Martens, "Spray Drying Handbook", 3rd Ed. 1979, G. Goodwin Ltd. London.

Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books, Caldwell N.J.; H. v. Olphen, "Introduction to Clay Colloid Chemistry"; 2nd Ed., J. Wiley & Sons, N.Y., Marsden, "Solvents Guide", 2nd Ed., Interscience, N.Y. 1950; McCutcheon's, "Detergents and Emulsifiers Annual", MC Publ. Corp., Ridgewood N.J.; Sisley and Wood, "Encyclopedia of Surface Active Agents", Chem. Publ. Co. Inc., N. Y. 1964; Schönfeldt, Grenzflächenaktive Äthylenoxidaddukte", Wiss. Verlagsgesell., Stuttgart 1976, Winnacker-Küchler, "Chemische Technologie", Band 7, C. Hauser Verlag München, 4. Aufl. 1986.

Auf der Basis dieser Formulierungen lassen sich auch Kombinationen mit anderen pestizid wirksamen Stoffen, wie anderen Herbiziden, Fungiziden oder Insektiziden, sowie Düngemitteln und/oder Wachstumsregulatoren herstellen, z. B. in Form einer Fertigformulierung oder als Tankmix.

Spritzpulver (benetzbare Pulver) sind in Wasser gleichmäßig dispergierbare Präparate, die neben dem Wirkstoff außer einem Verdünnungs- oder Inertstoff noch Netzmittel, z. B. polyoxethylierte Alkylphenole, polyoxethylierte Fettalkohole oder -Fettamine, Alkan- oder Alkylbenzolsulfonate und Dispergiermittel, z. B. ligninsulfonsaures Natrium, 2,2'-dinaphthylmethan-6,6'disulfonsaures Natrium, dibutylnaphthalin-sulfonsaures Natrium oder auch oleylmethyltaurinsaures Natrium enthalten.

Emulgierbare Konzentrate werden durch Auflösen des Wirkstoffes in einem organischen Lösungsmittel, z.B. Butanol, Cyclohexanon, Dimethylformamid, Xylol oder auch höhersiedenden Aromaten oder Kohlenwasserstoffen unter Zusatz von einem oder mehreren Emulgatoren hergestellt. Als Emulgatoren können beispielsweise verwendet werden: Alkylarylsulfonsaure Calcium-Salze wie Ca-Dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte, Alkylpolyether, Sorbitanfettsäureester, Polyoxyethylensorbitanfettsäureester oder Polyoxethylensorbitester.

Stäubemittel erhält man durch Vermahlen des Wirkstoffes mit fein verteilten festen stoffen, z. B. Talkum, natürlichen Tonen wie Kaolin, Bentonit, Pyrophyllit oder Diatomeenerde.

Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen wie Sand, Kaolinite oder von granuliertem Inertmaterial. Auch können geeignete Wirkstoffe in der für die Herstellung von Düngemittelgranulaten übichen Weise - gewünschtenfalls in Mischung mit Düngemitteln - granuliert werden.

Die agrochemischen Zubereitungen enthalten in der Regel 0,1 bis 99 Gewichtsprozent, insbesondere 2 bis 95 Gew.-%, Wirkstoffe A + B. Die Konzentrationen der Wirstoffe A + B können in den Formuleriungen verschieden sein.

In Spritzpulvern beträgt die Wirkstoffkonzentration z.B. etwa 10 bis 95 Gew.-%, der Rest zu 100 Gew.-% besteht aus üblichen Formulierungsbestandteilen. Bei emulgierbaren Konzentraten kann die Wirkstoffkonzentration etwa 1 bis 85 Gew.-%, vorzugsweise 5 bis 80 Gew.-% betragen. Staubförmige Formulierungen enthalten etwa 1 bis 25 Gew.-%, meistens 5 bis 20 Gew.-% an Wirkstoff, versprühbare Lösungen etwa 0,2 bis 25 Gew.-%, vorzugsweise 2 bis 20 Gew.-% Wirkstoff. Bei Granulaten wie wasserdispergierbaren Granulaten hängt der Wirkstoffgehalt zum Teil davon ab, ob die wirksame Verbindung flüssig oder fest vorliegt und welche Granulierhilfsmittel und Füllstoffe verwendet werden. In der Regel liegt der Gehalt bei den in Wasser dispergierbaren Granulaten zwischen 10 und 90 Gew.-%.

Daneben enthalten die genannten Wirkstofformulierungen gegebenenfalls die jeweils üblichen Haft-, Netz-, Dispergier-, Emulgier-, Penetrations-, Lösungsmittel, Füll- oder Trägerstoffe.

Zur Anwendung werden die in handelsüblicher Form vorliegenden Formulierungen gegebenenfalls in üblicher Weise verdünnt, z. B. bei Spritzpulvern, emulgierbaren Konzentraten, Dispersionen und wasserdispergierbaren Granulaten mittels Wasser. Staubförmige Zubereitungen, Boden- bzw. Streugranulate, sowie versprühbare Lösungen werden vor der Anwendung üblicherweise nicht mehr mit weiteren inerten Stoffen verdünnt.

Mit den äußeren Bedingungen wie Temperatur, Feuchtigkeit, der Art des verwendeten Herbizids u. a. variiert die erforderliche Aufwandmenge der Verbindungen der Formel (I).

Folgende Beispiele dienen zur Erläuterung der Erfindung:

A. Formulierungsbeispiele

a) Ein Stäubmittel wird erhalten, indem man 10 Gew.-Teile einer erfindungsgemäßen Wirkstoffkombination und 90 Gew.-Teile Talkum als Inertstoff mischt und in einer Schlagmühle zerkleinert.

b) Ein in Wasser leicht dispergierbares, benetzbares Pulver wird erhalten, indem man 25 Gewichtsteile Wirkstoff A + B, 64 Gewichtsteile kaolinhaltigen Quarz als Inertstoff, 10 Gewichtsteile ligninsulfonsaures Kalium und 1 Gew.-Teil oleoylmethyltaurinsaures Natrium als Netz- und Dispergiermittel mischt und in einer Stiftmühle mahlt.

c) Ein in Wasser leicht dispergierbares Dispersionskonzentrat wird erhalten, indem man 20 Gewichtsteile Wirkstoff A + B mit 6 Gew.-Teilen Alkylphenolpolyglykolether (®Triton X 207), 3 Gew.-Teilen Isotridecanolpolyglykolether (8 EO) und 71 Gew.-Teilen paraffinischem Mineralöl (Siedebereich z. B. ca. 255 bis über 277 °C) mischt und in einer Reibkugelmühle auf eine Feinheit von unter 5 Mikron vermahlt.

d) Ein emulgierbares Konzentrat wird erhalten aus 15 Gew.-Teilen Wirkstoff A + B, 75 Gew.-Teilen Cyclohexanon als Lösemittel und 10 Gew.-Teilen oxethyliertes Nonylphenol als Emulgator.

e) Ein in Wasser dispergierbares Granulat wird erhalten, indem man

| | | |
|---|---|---|
| 75 | Gewichtsteile | Wirkstoffe A + B, |
| 10 | " | ligninsulfonsaures Calcium, |
| 5 | " | Natriumlaurylsulfat, |
| 3 | " | Polyvinylalkohol und |
| 7 | " | Kaolin |

mischt, auf einer Stiftmühle mahlt und das Pulver in einem Wirbelbett durch Aufsprühen von Wasser als Granulierflüssigkeit granuliert.

f) Ein in Wasser dispergierbares Granulat wird auch erhalten, indem man

| | | |
|---|---|---|
| 25 | Gewichtsteile | Wirkstoffe A + B, |
| 5 | " | 2,2'-dinaphthylmethan-6,6'-disulfonsaures Natrium, |
| 2 | " | oleoylmethyltaurinsaures Natrium, |
| 1 | Gewichtsteil | Polyvinylalkohol, |
| 17 | Gewichtsteile | Calciumcarbonat und |
| 50 | " | Wasser |

auf einer Kolloidmühle homogensiert und vorzerkleinert, anschließend auf einer Perlmühle mahlt und die so erhaltene Suspension in einem Sprühturm mittels einer Einstoffdüse zerstäubt und trocknet.

Nach den unter a) bis f) beschriebenen Formulierungen werden beispielsweise die in der folgenden Tabelle 1 enthaltenen Wirkstoffkombinationen formuliert:

Tabelle 1

| Wirkstoff A | Wirkstoff B | Verhältnis |
|---|---|---|
| A1 | B1 | 1 : 1 |
| | | 1 : 2 |
| A1 | B2 | 1 : 1 |
| | | 1 : 2 |
| | | 1 : 3 |
| A1 | B3 | 1 : 1 |
| | | 1 : 2 |
| | | 1 : 4 |
| A1 | B4 | 1 : 1 |
| | | 1 : 2 |
| | | 1 : 4 |
| A1 | B5 | 1 : 1 |
| | | 1 : 2 |
| | | 1 : 4 |
| A1 | B6 | 1 : 1 |
| | | 1 : 2 |
| | | 1 : 4 |

Biologische Beispiele

1. Unkrautwirkung im Vorauflauf

Samen bzw. Rhizomstücke von mono- und dikotylen Unkrautpflanzen werden in Plastiktöpfen von 9 cm Durchmesser in sandiger Lehmerde ausgelegt und mit Erde abgedeckt. Im Reisanbau vorkommende Unkräuter werden im mit Wasser gesättigten Boden kultiviert, wobei so viel Wasser in die Töpfe gefüllt wird, daß das Wasser bis zu Bodenoberfläche oder einige Millimeter darüber steht. Die in Form von benetzbaren Pulvern oder Emulsionskonzentraten formulierten erfindungsgemäßen Wirkstoffkombinationen sowie in parallelen Versuchen die entsprechend formulierten Einzelwirkstoffe werden dann als wäßrige Suspensionen bzw. Emulsionen mit einer Wasseraufwandmenge von umgerechnet 600 bis 800 l/ha in unterschiedlichen Dosierungen auf die Oberfläche der Abdeckerde appliziert oder beim Reis ins Bewässerungswasser gegossen.

Nach der Behandlung werden die Töpfe im Gewächshaus aufgestellt und unter guten Wachstumsbedingungen für die Unkräuter gehalten. Die optische Bonitur der Pflanzen- bzw. der Auflaufschäden erfolgte

nach dem Auflaufen der Versuchspflanzen nach einer Versuchszeit von 3 bis 4 Wochen im Vergleich zu unbehandelten Kontrollen. Die erfindungsgemäßen herbiziden Mittel weisen eine gute herbizide Vorauflaufwirksamkeit gegen ein breites Spektrum von Ungräsern und Unkräutern auf.

Die erfindungsgemäßen Wirkstoffkombinationen haben eine herbizide Wirkung, die höher ist als sie aufgrund der beobachteten Wirkungen der Einzelkomponenten bei alleiniger Anwendung zu erwarten ist. Die Wirkstoffkombinationen sind somit synergistisch.

2. Unkrautwirkung im Nachauflauf

Samen bzw. Rhizomstücke von mono- und dikotylen Unkräutern werden in Plastiktöpfen in sandigem Lehmboden ausgelegt, mit Erde abgedeckt und im Gewächshaus unter guten Wachstumsbedingungen angezogen. Im Reisanbau vorkommende Unkräuter werden in Töpfen angezogen, in denen Wasser bis zu 2 cm über der Bodenoberfläche steht, und während der Versuchsphase kultiviert. Drei Wochen nach der Aussaat werden die Versuchspflanzen im Dreiblattstadium behandelt.

Die als Spritzpulver bzw. als Emulsionskonzentrate formulierten erfindungsgemäßen Wirkstoffkombinationen sowie in parallelen Versuchen die entsprechend formulierten Einzelwirkstoffe werden in verschiedenen Dosierungen mit einer Wasseraufwandmenge von umgerechnet 300 bis 600 l/ha auf die grünen Pflanzenteile gesprüht und nach ca. 3 bis 4 Wochen Standzeit der Versuchspflanzen im Gewächshaus unter optimalen Wachstumsbedingungen die Wirkung der Präparate optisch im Vergleich zu unbehandelten Kontrollen bonitiert. Bei Unkräutern, die im Reisanbau vorkommen, werden die Wirkstoffe auch direkt ins Bewässerungswasser gegeben (Applikation in Analogie zur sogenannten Granulatanwendung) oder auf Pflanzen und ins Bewässerungswasser gesprüht. Die erfindungsgemäßen Mittel weisen auch im Nachauflauf eine gute herbizide Wirksamkeit gegen ein breites Spektrum wirtschaftlich wichtiger Ungräser und Unkräuter auf. Die Wirkungen der erfindungsgemäßen Mittel sind synergistisch.

3. Kulturpflanzenverträglichkeit

In weiteren Versuchen im Gewächshaus werden Samen einer größeren Anzahl von Kulturpflanzen und Unkräutern in sandigem Lehmboden ausgelegt und mit Erde abgedeckt. Reis wird als Wasserreis im wassergesättigten Boden angezogen und kultiviert.

Ein Teil der Töpfe wird sofort wie unter 1. beschrieben behandelt, die übrigen im Gewächshaus aufgestellt, bis die Pflanzen zwei bis drei echte Blätter entwickelt haben und dann mit den erfindungsgemäßen Wirkstoffkombinationen und zum Vergleich nur mit einem Einzelwirkstoff in unterschiedlichen Dosierungen, wie unter 2. beschrieben besprüht. Bei Wasserreis erfolgt die Applikation teilweise auch durch Gießen der Wirkstoffe bzw. deren Formulierung in das Bewässerungswasser.

Vier bis fünf Wochen nach der Applikation und Standzeit im Gewächshaus wird mittels optischer Bonitur festgestellt, daß die erfindungsgemäßen Wirkstoffkombinationen verschiedene Kulturen im Vor- und Nachauflaufverfahren selbst bei hohen Wirkstoffdosierungen ungeschädigt lassen. Sie schonen Gramineen-Kulturen wie z. B. Weizen und Reis. Die erfindungsgemäßen Wirkstoffkombinationen weisen somit eine hohe Selektivität bei Anwendung zur Bekämpfung von unerwünschten Pflanzenwuchs in landwirtschaftlichen Kulturen auf.

Im Vergleich zu der alleinigen Anwendung der einzelnen Wirkstoffe zeigt sich besonders auch bei erhöhten Dosierungen, daß die Selektivität der Wirkstoffkombinationen im Vergleich zu den Einzelwirkstoffen bei gleicher Aufwandmenge des jeweils wirksamsten der Herbizide besser ist. Die Wirkstoffkombinationen sind somit geeignet, Herbizidschäden an Kulturpflanzen effektiv reduzieren zu können.

4. Biologischer Feldversuch

In einem Feldversuch mit Parzellen von 0,8 $m^2$ Größe wurde Reis im 2-Blattstadium 2 cm tief eingepflanzt. Zusätzlich wurden Unkräuter gesät bzw. eingepflanzt. Im 1/2-Blattstadium von Echinochloa wurde die Anbaufläche mit erfindungsgemäßen Mitteln behandelt. 28 Tage nach der Behandlung wurde die Schädigung beim Reis und 56 Tage nach der Behandlung die Schädigung bei den übrigen Pflanzen bonitiert. Die Ergebnisse sind in Tabelle 2 zusammengestellt.

Tabelle 2: Herbizide Wirkung (Feldversuch)

| Herbizid(e) | Dosis [g AS/ha] | % Schädigung bei SAPY | CYSE | SCIU | MOVP | Reis verpflanzt |
|---|---|---|---|---|---|---|
| A1 | 10,5 | 40 | 30 | 10 | 98 | 0 |
| | 21,0 | 88 | 60 | 75 | 100 | 0 |
| B1 | 10,5 | 45 | 65 | 75 | 50 | 3 |
| | 15,8 | 70 | 70 | 65 | 65 | 5 |
| | 21,0 | 70 | 75 | 70 | 70 | 5 |
| A1+B1 | 10,5+15,8 | 85 | 83 | 78 | 100 | 3 |
| | 10,5+21,0 | 93 | 85 | 90 | 99 | 10 |
| | 21,0+10,5 | 88 | 83 | 90 | 100 | 3 |
| | 21,0+15,8 | 90 | 85 | 93 | 100 | 0 |
| | 21,0+21,0 | 95 | 90 | 95 | 100 | 3 |

Abkürzungen:
AS = Aktive Substanz (bezogen auf reinen Wirkstoff)
SAPY = Sagittaria pygmaea; Wurzel-Knöllchen verpflanzt
SCIU = Scirpus juncoides, gesät
MOVP = Monochoria vaginalis, gesät
CYSE = Cyperus serotinus; Wurzel-Knöllchen (tubers) verpflanzt
A1 = 1-[(2-Ethoxyphenoxy)sulfonyl]-3-(4,6-dimethoxy-2-pyrimidinyl)-harnstoff als 0,07 %iges Granulat
B1 = Pyrazosulfuron-ethyl als 0,07 %iges Granulat

5. Biologischer Feldversuch

Analog Beispiel 4 wurden Parzellen mit Weizen bzw. Gerste, die mit Unkräutern durchsetzt waren, im 2- bis 4-Blatt-Stadium behandelt und 4 bis 6 Wochen nach Applikation der in Tabelle 3 angegebenen Mittel bonitiert; die Ergebnisse sind in Tabelle 3 zusammengefaßt.

Tabelle 3

| Herbizid(e) | Dosis [g AS/ha] | % Schädigung bei AMARE | CHEAL | POLSC | TA | HV |
|---|---|---|---|---|---|---|
| A1 | 11,25 | 83 | 39 | 45 | 0 | 0 |
| | 22,5 | 84 | 41 | 76 | 0 | 0 |
| | 45 | 89 | 43 | 78 | 0 | 0 |
| B3 | 30 | 64 | 70 | 54 | 0 | 0 |
| | 60 | 89 | 92 | 86 | 0 | 0 |
| A1+B3 | 30+11,25 | 97 | 90 | 86 | 0 | 0 |
| | 30+22,5 | 97 | 92 | 92 | 0 | 0 |

Abkürzungen zu Tabelle 3:

AS = Aktive Substanz (bezogen auf reinen Wirkstoff)

A1 = 1-[(2-Ethoxyphenoxy)sulfonyl]-3-(4,6-dimethoxy-2-pyrimidinyl)-harnstoff und 0,3 % Netzmittel auf Basis von $C_{12}/C_{14}$-Fettalkoholdiglykolethersulfat-Natriumsalz

B3 = Amidosulfuron mit 0,3 % Netzmittel wie bei A1

AMARE = Amaranthus retroflexus

CHEAL = Chenopodium album

POLSC = Polygonum scandens

TA = Triticum aestivum (Weizen)

HV = Hordeum vulgare (Gerste)

**Patentansprüche**

**Patentansprüche für folgende Vertragsstaaten : AT, CH, DE, DK, FR, GB, IT, LI, NL**

**1.** Herbizide Mittel gekennzeichnet durch einen synergistisch wirksamen Gehalt an

A) Verbindungen der allgemeinen Formel (I) oder deren Salze

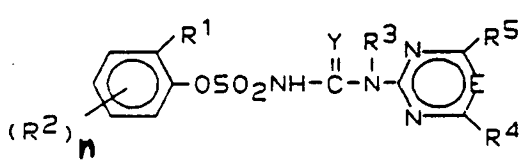

(I)

worin

$a_1$)
R[1] Ethoxy, Propoxy, oder Isopropoxy und
$R^2$ Halogen, $NO_2$, $CF_3$, CN, $C_1$-$C_4$-Alkyl, $C_1$-$C_4$-Alkoxy, $C_1$-$C_4$-Alkylthio oder ($C_1$-$C_4$-Alkoxy)-carbonyl und
n 0, 1, 2 oder 3 oder

$a_2$)
$R^1$ gegebenenfalls ungesättigtes $C_1$-$C_8$-Alkoxy, das substituiert ist durch Halogen, gegebenenfalls ungesättigtes $C_1$-$C_6$-Alkoxy, einen Rest der Formel ($C_1$-$C_6$-Alkyl)-S-, ($C_1$-$C_6$-Alkyl)-SO-, ($C_1$-$C_6$-Alkyl)-$SO_2$-, ($C_1$-$C_6$-Alkyl)-O-CO-, $NO_2$, CN oder Phenyl; ferner $C_2$-$C_8$-Alkenyloxy oder -Alkinyloxy und
$R^2$ gesättigtes oder ungesättigtes $C_1$-$C_8$-Alkyl, Phenyl, Phenoxy, $C_1$-$C_4$-Alkoxy, $C_1$-$C_4$-Alkylthio, ($C_1$-$C_4$-Alkoxy)-carbonyl, wobei alle vorstehende Reste für $R^2$ durch Halogen $C_1$-$C_4$-Alkoxy oder $C_1$-$C_4$-Alkylthio substituiert sein können, oder Halogen, $NO_2$, $C_1$-$C_4$-Alkylsulfonyl oder -sulfinyl und
n 0, 1, 2 oder 3 oder

$a_3$)
$R^1$ $C_1$-$C_8$-Alkoxy und
$R^2$ $C_2$-$C_8$-Alkenyl oder -Alkinyl, Phenyl oder Phenoxy, wobei die genannten Reste für $R^2$ unsubstituiert oder durch Halogen, $C_1$-$C_4$-Alkoxy oder -Alkylthio substituiert sind, oder $C_1$-$C_4$-Alkylsulfonyl oder -Alkylsulfinyl und
n 1, 2 oder 3 oder

$a_4$)
$R^1$ - jeweils in 2-Stellung am Phenylrest - Halogen, Methoxy, Ethyl oder Propyl,
$R^2$ ($C_1$-$C_4$-Alkoxy)-carbonyl in 6-Stellung im Phenylrest und
n 1

sowie in allen Fällen $a_1$)-$a_4$)
$R^3$ Wasserstoff, gesättigtes oder ungesättigtes $C_1$-$C_8$-Alkyl oder $C_1$-$C_4$-Alkoxy,
$R^4$, $R^5$ unabhängig voneinander Wasserstoff, Halogen, $C_1$-$C_4$-Alkyl, $C_1$-$C_4$-Alkoxy, $C_1$-$C_4$-Alkylthio, wobei die letztgenannten drei Reste unsubstituiert oder durch Halogen, $C_1$-$C_4$-Alkoxy oder $C_1$-$C_4$-Alkylthio substituiert sind,
Y O oder S und
E CH oder N

bedeuten,
in Kombination mit
B) einer oder mehreren Verbindung(en) aus der Gruppe, welche die Verbindungen
B1) Pyrazosulfuron-ethyl (NC 311) der Formel

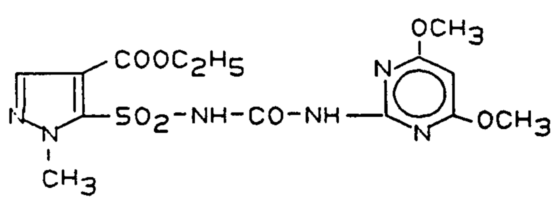

(B1)

B2) Bensulfuron-methyl der Formel

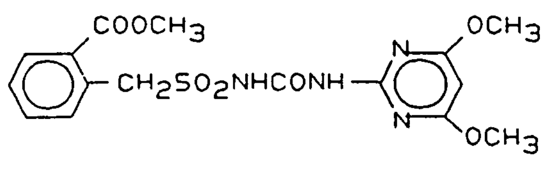

(B2)

B3) Amidosulfuron der Formel

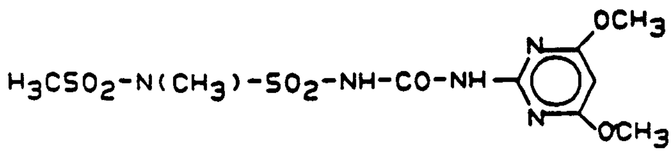

(B3)

B4) Imazosulfuron (TH 913) der Formel

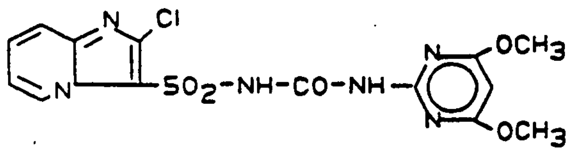

(B4)

B5) Dimetrasulfuron (Cinosulfuron) der Formel

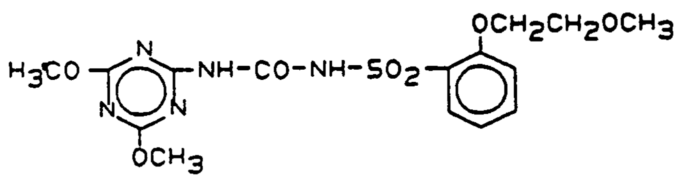

(B5)

und

B6) Metsulfuron-methyl (DPX-T 6376) der Formel

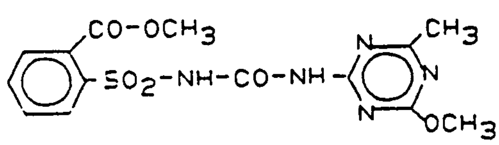

(B6)

enthält.

**2.** Mittel nach Anspruch 1, dadurch gekennzeichnet, daß es Verbindungen der Formel (I) oder deren Salze enthält, worin

$a_1$)

$R^1$ Ethoxy, Propoxy oder Isopropoxy und

$R^2$ in Position 6 orientiert ist und die obengenannte Bedeutung hat, und

n 0 oder 1 oder

$a_2$)

$R^1$ gegebenenfalls ungesättigtes $C_1$-$C_4$-Alkoxy, das substituiert ist durch Halogen, $C_1$-$C_4$-Alkoxy, $C_1$-$C_4$-Alkylthio oder -sulfinyl oder -sulfonyl, ($C_1$-$C_4$-Alkoxy)-carbonyl, $NO_2$, CN oder Phenyl; ferner $C_2$-$C_5$-Alkenyloxy oder $C_2$-$C_4$-Alkinyloxy und

$R^2$ $C_1$-$C_4$-Alkyl, $C_2$-$C_5$-Alkenyl, ($C_1$-$C_4$-Alkoxy)-carbonyl $C_1$-$C_4$-Alkoxy oder $C_1$-$C_4$-Alkylthio, die wie oben angegeben substituiert sein können, oder Halogen und

n 0 oder 1 oder

$a_3$)

$R^1$ Methoxy, Ethyl oder Propyl und

$R^2$ 6-Methoxycarbonyl oder 6-Ethoxycarbonyl und

n 1 sowie

in allen Fällen $a_1$) - $a_3$)

| | |
|---|---|
| $R^3$ | Wasserstoff, $C_1$-$C_4$-Alkyl, |
| $R^4$, $R^5$ | Halogen, $C_1$-$C_4$-Alkyl, $C_1$-$C_4$-Alkoxy oder $C_1$-$C_4$-Alkylthio, wobei die letztgenannten 3 Reste unsubstituiert oder durch Halogen, $C_1$-$C_4$-Alkoxy oder $C_1$-$C_4$-Alkylthio substituiert sind, |
| Y | O oder S, |
| E | CH oder N |

bedeuten.

**3.** Mittel nach Anspruch 1 oder 2, dadurch gekennzeichnet, daß sie ein oder mehrere Verbindungen der Formeln A1, A2 und A3 oder deren Salze

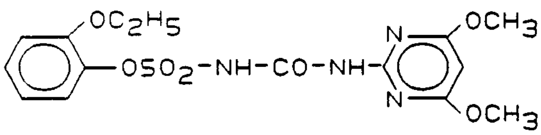

(A1)

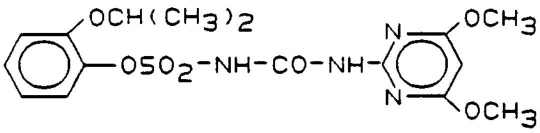

(A2)

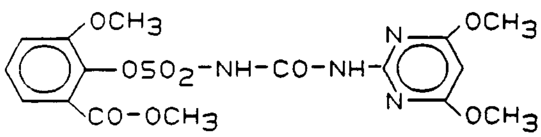

(A3)

enthalten.

**4.** Mittel nach einem oder mehreren der Ansprüche 1 bis 3, dadurch gekennzeichnet, daß sie 0,1 bis 99 Gew.-% der Wirkstoffe A und B neben üblichen Formulierungshilfsmitteln enthalten.

**5.** Mittel nach einem oder mehreren der Ansprüche 1 bis 4, dadurch gekennzeichnet, daß sie die Wirkstoffe A und B im Gewichtsverhältnis 1 : 0,1 bis 1 : 10 enthalten.

**6.** Verfahren zur Herstellung eines Mittels nach einem oder mehreren der Ansprüche 1 bis 5, dadurch gekennzeichnet, daß man ein oder mehrere Verbindungen A mit ein oder mehreren Verbindungen B analog einer üblichen Pflanzenschutzmittelformulierung aus der Gruppe, enthaltend Spritzpulver, emulgierbare Konzentrate, wäßrige Lösungen, Emulsionen, versprühbare Lösungen (tank-mix), Dispersionen auf Öl- oder Wasserbasis, Suspoemulsionen, Stäubemittel, Beizmittel, Granulate zur Boden- oder Streuapplikation, wasserdispergierbare Granulate, ULV-Formulierungen, Mikrokapseln und Wachse, formuliert.

**7.** Verfahren zur Bekämpfung von unerwünschten Pflanzen, dadurch gekennzeichnet, daß man auf diese oder deren Anbauflächen eine herbizid wirksame Menge einer in einem oder mehreren der Ansprüche 1 bis 5 definierten Kombination von Wirkstoffen A + B appliziert.

**8.** Verfahren nach Anspruch 7, dadurch gekennzeichnet, daß Unkräuter in Nutzpflanzenkulturen selektiv bekämpft werden.

**9.** Verfahren nach Anspruch 8, dadurch gekennzeichnet, daß die Nutzpflanzenkultur eine aus der Gruppe Weizen, Gerste, Mais und Reis ist.

**10.** Verwendung der herbiziden Mittel nach einem oder mehreren der Ansprüche 1 bis 5 zur selektiven Unkrautbekämpfung in Nutzpflanzenkulturen.

**Patentansprüche für folgenden Vertragsstaat : ES**

1. Verwendung von synergistischen herbiziden Wirkstoffkombinationen aus
A) Verbindungen der allgemeinen Formel (I) oder deren Salze

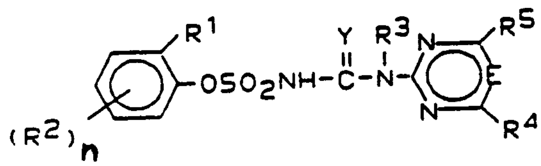

(I)

worin

$a_1$)

R[1] Ethoxy, Propoxy, oder Isopropoxy und

R[2] Halogen, $NO_2$, $CF_3$, CN, $C_1$-$C_4$-Alkyl, $C_1$-$C_4$Alkoxy, $C_1$-$C_4$-Alkylthio oder ($C_1$-$C_4$-Alkoxy)-carbonyl und

n 0, 1, 2 oder 3 oder

$a_2$)

R[1] gegebenenfalls ungesättigtes $C_1$-$C_8$-Alkoxy, das substitutiert ist durch Halogen, gegebenenfalls ungesättigtes $C_1$-$C_6$-Alkoxy, einen Rest der Formel ($C_1$-$C_6$-Alkyl)-S-, ($C_1$-$C_6$-Alkyl)-SO-, ($C_1$-$C_6$-Alkyl)-$SO_2$-, ($C_1$-$C_6$-Alkyl)-O-CO, $NO_2$, CN oder Phenyl; ferner $C_2$-$C_8$-Alkenyloxy oder -Alkinyloxy und

R[2] gesättigtes oder ungesättigtes $C_1$-$C_8$-Alkyl, Phenyl, Phenoxy, $C_1$-$C_4$-Alkoxy, $C_1$-$C_4$-Alkylthio, ($C_1$-$C_4$-Alkoxy)-carbonyl, wobei alle vorstehende Reste für R[2] durch Halogen $C_1$-$C_4$-Alkoxy oder $C_1$-$C_4$-Alkylthio substituiert sein können, oder Halogen, $NO_2$, $C_1$-$C_4$-Alkylsulfonyl oder -sulfinyl und

n 0, 1, 2 oder 3 oder

$a_3$)

R[1] $C_1$-$C_8$-Alkoxy und

R[2] $C_2$-$C_8$-Alkenyl oder -Alkinyl, Phenyl oder Phenoxy, wobei die genannten Reste für R[2] unsubstituiert oder durch Halogen, $C_1$-$C_4$-Alkoxy oder -Alkylthio substituiert sind, oder $C_1$-$C_4$-Alkylsulfonyl oder -Alkylsulfinyl und

n 1, 2 oder 3 oder

$a_4$)

R[1] - jeweils in 2-Stellung am Phenylrest - Halogen, Methoxy, Ethyl oder Propyl,

R[2] ($C_1$-$C_4$-Alkoxy)-carbonyl in 6-Stellung im Phenylrest und

n 1

sowie in allen Fällen $a_1$)-$a_4$)

R[3] Wasserstoff, gesättigtes oder ungesättigtes $C_1$-$C_8$-Alkyl oder $C_1$-$C_4$-Alkoxy,

R[4], R[5] unabhängig voneinander Wasserstoff, Halogen, $C_1$-$C_4$-Alkyl, $C_1$-$C_4$-Alkoxy, $C_1$-$C_4$-Alkylthio, wobei die letztgenannten drei Reste unsubstituiert oder durch Halogen, $C_1$-$C_4$-Alkoxy oder $C_1$-$C_4$-Alkylthio substituiert sind,

Y O oder S und

E CH oder N

bedeuten,

in Kombination mit

B) einer oder mehreren Verbindung(en) aus der Gruppe, welche die Verbindungen

B1) Pyrazosulfuron-ethyl (NC 311) der Formel

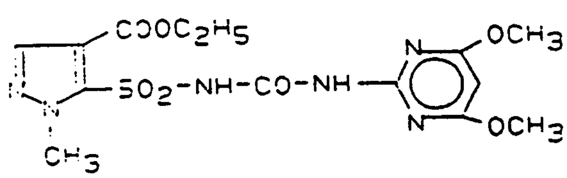

(B1)

B2) Bensulfuron-methyl der Formel

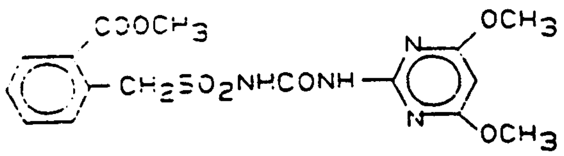

(B2)

B3) Amidosulfuron der Formel

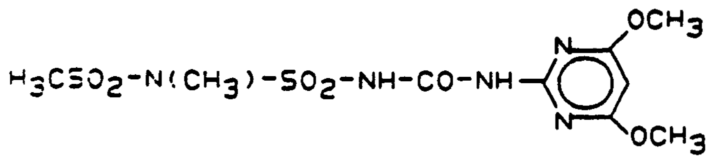

(B3)

B4) Imazosulfuron (TH 913) der Formel

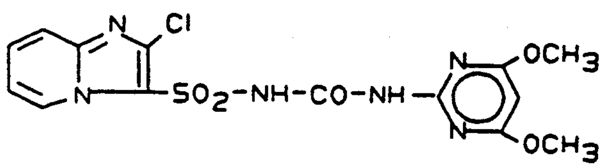

(B4)

B5) Dimetrasulfuron (Cinosulfuron) der Formel

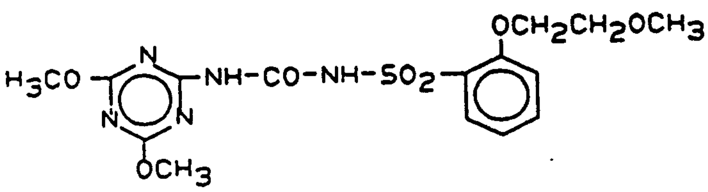

(B5)

B6) Metsulfuron-methyl (DPX-T 6376) der Formel

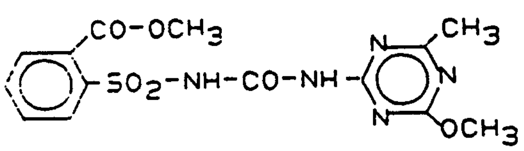

(B6)

enthält, zur Unkrautbekämpfung.

**2.** Verwendung nach Anspruch 1, dadurch gekennzeichnet, daß in den Verbindungen der Formel (I) oder deren Salze

$a_1$)

$R^1$ Ethoxy, Propoxy oder Isopropoxy und

$R^2$ in Position 6 orientiert ist und die obengenannte Bedeutung hat, und

n 0 oder 1 oder

$a_2$)

$R^1$ gegebenenfalls ungesättigtes $C_1$-$C_4$-Alkoxy, das substituiert ist durch Halogen, $C_1$-$C_4$-Alkoxy, $C_1$-$C_4$-Alkylthio oder -sulfinyl oder -sulfonyl, ($C_1$-$C_4$-Alkoxy)-carbonyl, $NO_2$, CN

oder Phenyl; ferner $C_2$-$C_5$-Alkenyloxy oder $C_2$-$C_4$-Alkinyloxy und

$R^2$ $C_1$-$C_4$-Alkyl, $C_2$-$C_5$-Alkenyl, ($C_1$-$C_4$-Alkoxy)-carbonyl $C_1$-$C_4$-Alkoxy oder $C_1$-$C_4$-Alkylthio, die wie oben angegeben substituiert sein können, oder Halogen und

n 0 oder 1 oder

$a_3$)

$R^1$ Methoxy, Ethyl oder Propyl und

$R^2$ 6-Methoxycarbonyl oder 6-Ethoxycarbonyl und

n 1 sowie

in allen Fällen $a_1$) - $a_3$)

$R^3$ Wasserstoff, $C_1$-$C_4$-Alkyl,

$R^4$, $R^5$ Halogen, $C_1$-$C_4$-Alkyl, $C_1$-$C_4$-Alkoxy oder $C_1$-$C_4$-Alkylthio, wobei die letztgenannten 3 Reste unsubstituiert oder durch Halogen, $C_1$-$C_4$-Alkoxy oder $C_1$-$C_4$-Alkylthio substituiert sind,

Y O oder S,

E CH oder N

bedeuten.

**3.** Verwendung nach Anspruch 1 oder 2, daß ein oder mehrere Verbindungen der Formel A1, A2 und A3 oder deren Salze

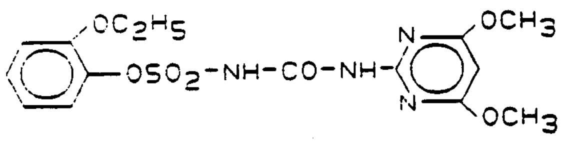

(A1)

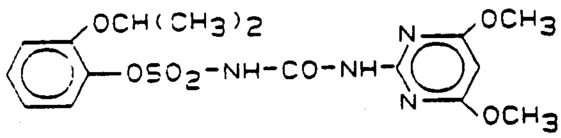

(A2)

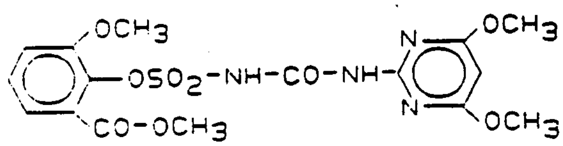

(A3)

verwendet werden.

**4.** Verwendung nach Anspruch 1, 2 oder 3, dadurch gekennzeichnet, daß 0.1 bis 99 Gew.-% Wirkstoffe A und B zusammen mit 1 bis 99,9 Gew.-% üblichen Formulierungshilfsmitteln verwendet werden.

**5.** Verwendung nach einem der Ansprüche 1 bis 4, dadurch gekennzeichnet, daß die Wirkstoffe A und B ein Gewichtsverhältnis 1:0,1 is 1:10 verwendet werden.

**6.** Verwendung nach einem der Ansprüche 1 bis 5 zur selektiven Unkrautbekämpfung in Nutzpflanzenkulturen.

**7.** Verfahren zur Herstellung eines herbiziden Mittels, das ein oder mehrere Verbindungen A und ein oder mehrere Verbindungen B enthälkt, wie sie in den Ansprüchen 1 bis 3 definiert sind, dadurch gekennzeichnet, daß man ein oder mehrere Verbindungen A mit ein oder mehreren Verbindungen B analog einer üblichen Pflanzenschutzmittelformulierung aus der Gruppe, enthaltend Spritzpulver, emulgierbare Konzentrate, wäßrige Lösungen, Emulsionen, versprühbare Lösungen (tank-mix), Dispersionen auf Öl- oder Wasserbasis, Suspoemulsionen, Stäubemittel, Beizmittel, Granulate zur Boden- oder Streuapplikation, wasserdispergierbare Granulate, ULV-Formulierungen, Mikrokapseln und Wachse, formuliert.

**8.** Verfahren zur Bekämpfung von unerwünschten Pflanzen, dadurch gekennzeichnet, daß man auf diese oder deren Anbauflächen eine herbizid wirksame Menge einer in einem oder mehreren der Ansprüche 1 bis 5 definierten Kombination von Wirkstoffen A + B appliziert.

**9.** Verfahren nach Anspruch 8, dadurch gekennzeichnet, daß Unkräuter in Nutzpflanzenkulturen selektiv bekämpft werden.

**10.** Verfahren nach Anspruch 9, dadurch gekennzeichnet, daß die Nutzpflanzenkultur eine aus der Gruppe Weizen, Gerste, Mais und Reis ist.

**Claims**
**Claims for the following Contracting States : AT, CH, DE, DK, FR, GB, IT, LI, NL**

**1.** A herbicidal composition with a synergistically effective content of
A) compounds of the formula (I) or salts thereof

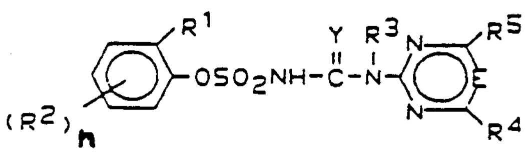

(I)

in which

$a_1$)

$R^1$ is ethoxy, propoxy or isopropoxy and

$R^2$ is halogen, $NO_2$, $CF_3$, CN, $C_1$-$C_4$-alkyl, $C_1$-$C_4$-alkoxy, $C_1$-$C_4$-alkylthio or ($C_1$-$C_4$-alkoxy)-carbonyl and

n is 0, 1, 2 or 3, or

$a_2$)

$R^1$ is optionally unsaturated $C_1$-$C_8$-alkoxy which is substituted by halogen, optionally unsaturated $C_1$-$C_6$-alkoxy, a radical of the formula ($C_1$-$C_6$-alkyl)-S-, ($C_1$-$C_6$-alkyl)-SO-, ($C_1$-$C_6$-alkyl)-$SO_2$-, ($C_1$-$C_6$-alkyl)-O-CO-, $NO_2$, CN or phenyl; furthermore $C_2$-$C_8$-alkenyloxy or -alkynyloxy and

$R^2$ is saturated or unsaturated $C_1$-$C_8$-alkyl, phenyl, phenoxy, $C_1$-$C_4$-alkoxy, $C_1$-$C_4$-alkylthio, ($C_1$-$C_4$-alkoxy)-carbonyl, it being possible for all the above $R^2$ radicals to be substituted by halogen, $C_1$-$C_4$-alkoxy or $C_1$-$C_4$-alkylthio, or is halogen, $NO_2$, $C_1$-$C_4$-alkylsulfonyl or -sulfinyl, and

n is 0, 1, 2 or 3, or

$a_3$)

$R^1$ is $C_1$-$C_8$-alkoxy and

$R^2$ is $C_2$-$C_8$-alkenyl or -alkynyl, phenyl or phenoxy, the abovementioned $R^2$ radicals being unsubstituted or substituted by halogen, $C_1$-$C_4$-alkoxy or -alkylthio, or is $C_1$-$C_4$-alkylsulfonyl or -alkylsulfinyl and

n is 1, 2 or 3, or

$a_4$)

$R^1$ - in each case in the 2-position on the phenyl radical - is halogen, methoxy, ethyl or propyl,

$R^2$ is ($C_1$-$C_4$-alkoxy)-carbonyl in the 6-position on the phenyl radical and

n is 1,

and, in all cases $a_1$)-$a_4$),

$R^3$ is hydrogen, saturated or unsaturated $C_1$-$C_8$-alkyl or $C_1$-$C_4$-alkoxy,

$R^4$ and $R^5$ independently of one another are hydrogen, halogen, $C_1$-$C_4$-alkyl, $C_1$-$C_4$-alkoxy, $C_1$-$C_4$-alkylthio, the three last-mentioned radicals being unsubstituted or substituted by halogen, $C_1$-$C_4$-alkoxy or $C_1$-$C_4$-alkylthio,

Y is O or S and

E is CH or N,

in combination with

B) one or more compound(s) from the group comprising the compounds

B1) pyrazosulfuron-ethyl (NC 311) of the formula

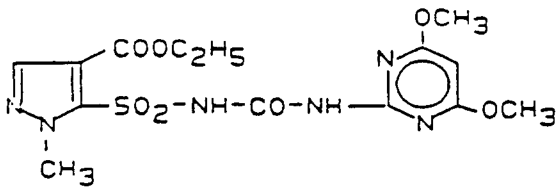

(B1)

B2) bensulfuron-methyl of the formula

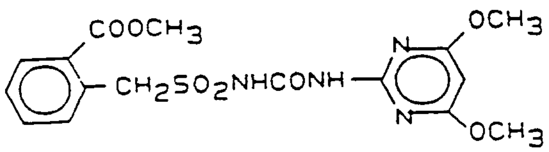

(B2)

B3) amidosulfuron of the formula

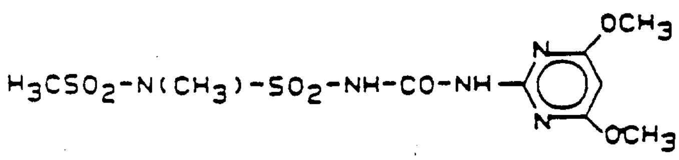

(B3)

B4) imazosulfuron (TH 913) of the formula

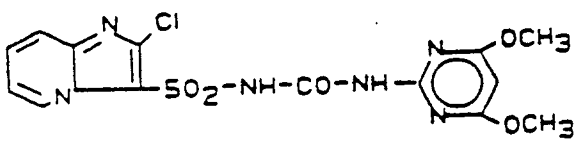

(B4)

B5) dimetrasulfuron (cinosulfuron) of the formula

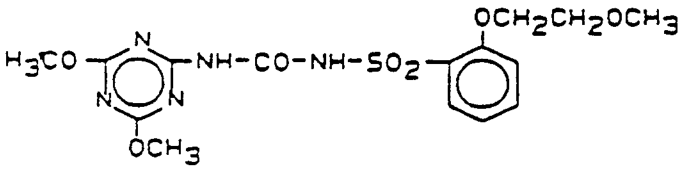

(B5)

and

B6) metsulfuron-methyl (DPX-T 6376) of the formula

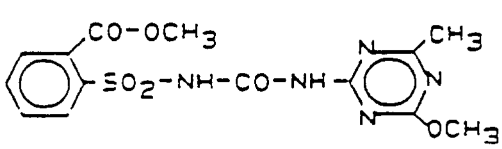

(B6)

2. The composition as claimed in claim 1, which contains compounds of the formula (I) or salts thereof, in which

$a_1$)

- $R^1$ is ethoxy, propoxy or isopropoxy and
- $R^2$ is in the 6-position and has the above-mentioned meaning, and
- n is 0 or 1, or

$a_2$)

- $R^1$ is optionally unsaturated $C_1$-$C_4$-alkoxy which is substituted by halogen, $C_1$-$C_4$-alkoxy, $C_1$-$C_4$-alkylthio or -sulfinyl or -sulfonyl, ($C_1$-$C_4$-alkoxy)-carbonyl, $NO_2$, CN or phenyl; furthermore $C_2$-$C_5$-alkenyloxy or $C_2$-$C_4$-alkynyloxy, and
- $R^2$ is $C_1$-$C_4$-alkyl, $C_2$-$C_5$-alkenyl, ($C_1$-$C_4$-alkoxy)-carbonyl, $C_1$-$C_4$-alkoxy or $C_1$-$C_4$-alkylthio, each of which can be substituted as indicated above, or is halogen, and
- n is 0 or 1, or

$a_3$)

- $R^1$ is methoxy, ethyl or propyl and
- $R^2$ is 6-methoxycarbonyl or 6-ethoxycarbonyl and
- n is 1, and,

in all cases $a_1$) - $a_3$),

- $R^3$ is hydrogen, $C_1$-$C_4$-alkyl,
- $R^4$ and $R^5$ are halogen, $C_1$-$C_4$-alkyl, $C_1$-$C_4$-alkoxy or $C_1$-$C_4$-alkylthio, the 3 last-mentioned radicals being unsubstituted or substituted by halogen, $C_1$-$C_4$-alkoxy or $C_1$-$C_4$-alkylthio,
- Y is O or S and
- E is CH or N.

3. The composition as claimed in claim 1 or 2, which contains one or more compounds of the formulae A1, A2 and A3 or salts thereof

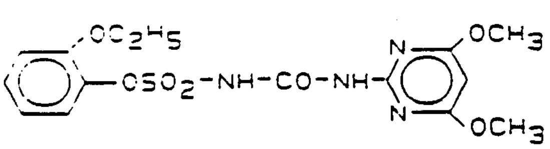
(A1)

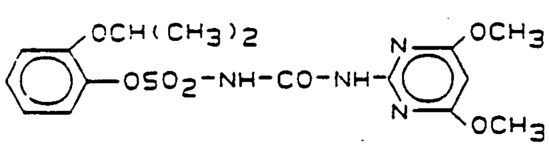
(A2)

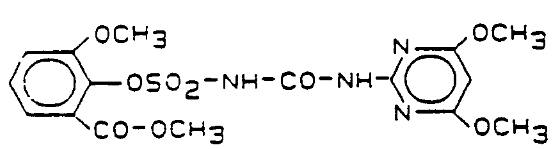
(A3)

4. The composition as claimed in one or more of claims 1 to 3, which contains 0.1 to 99% by weight of the active substances A and B, besides customary formulation auxiliaries.

5. The composition as claimed in one or more of claims 1 to 4, which contains the active substances A and B in a ratio by weight of 1 : 0.1 to 1 : 10.

6. A process for the preparation of a composition as claimed in one or more of claims 1 to 5, which comprises formulating one or more compounds A with one or more compounds B analogously to a conventional formulation for crop protection agents from the group comprising wettable powders, emulsifiable concentrates, aqueous solutions, emulsions, sprayable solutions (tank mix), dispersions on an oil or water base, suspoemulsions, dusts, seed-dressing agents, granules for soil application or for broadcasting, water-dispersible granules, ULV formulations, microcapsules and waxes.

7. A method of controlling undesirable plants, which comprises applying to these plants or their areas of cultivation a herbicidally effective amount of a combination of active substances A + B defined in one or more of claims 1 to 5.

8. The method as claimed in claim 7, wherein weeds in crops of useful plants are controlled selectively.

9. The method as claimed in claim 8, wherein the crop of useful plants is one from amongst the group comprising wheat, barley, corn and rice.

10. The use of the herbicidal composition as claimed in one or more of claims 1 to 5 for selective weed control in crops of useful plants.

**Claims for the following Contracting State : ES**

1. The use of synergistic herbicidal active substance combinations of
A) compounds of the formula (I) or salts thereof

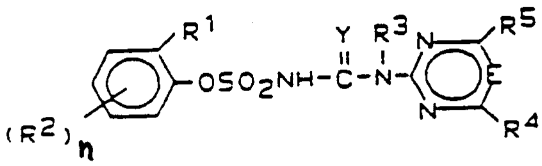

(I)

in which

$a_1$)
- $R^1$ is ethoxy, propoxy or isopropoxy and
- $R^2$ is halogen, $NO_2$, $CF_3$, CN, $C_1$-$C_4$-alkyl, $C_1$-$C_4$-alkoxy, $C_1$-$C_4$-alkylthio or ($C_1$-$C_4$-alkoxy)-carbonyl and
- n is 0, 1, 2 or 3, or

$a_2$)
- $R^1$ is optionally unsaturated $C_1$-$C_8$-alkoxy which is substituted by halogen, optionally unsaturated $C_1$-$C_6$-alkoxy, a radical of the formula ($C_1$-$C_6$-alkyl)-S-, ($C_1$-$C_6$-alkyl)-SO-, ($C_1$-$C_6$-alkyl)-$SO_2$-, ($C_1$-$C_6$-alkyl)-O-CO-, $NO_2$, CN or phenyl; furthermore $C_2$-$C_8$-alkenyloxy or -alkynyloxy and
- $R^2$ is saturated or unsaturated $C_1$-$C_8$-alkyl, phenyl, phenoxy, $C_1$-$C_4$-alkoxy, $C_1$-$C_4$-alkylthio, ($C_1$-$C_4$-alkoxy)-carbonyl, it being possible for all the above $R^2$ radicals to be substituted by halogen, $C_1$-$C_4$-alkoxy or $C_1$-$C_4$-alkylthio, or is halogen, $NO_2$, $C_1$-$C_4$-alkylsulfonyl or -sulfinyl, and
- n is 0, 1, 2 or 3, or

$a_3$)
- $R^1$ is $C_1$-$C_8$-alkoxy and
- $R^2$ is $C_2$-$C_8$-alkenyl or -alkynyl, phenyl or phenoxy, the abovementioned $R^2$ radicals being unsubstituted or substituted by halogen, $C_1$-$C_4$-alkoxy or -alkylthio, or is $C_1$-$C_4$-alkylsulfonyl or -alkylsulfinyl and
- n is 1, 2 or 3, or

$a_4$)
- $R^1$ - in each case in the 2-position on the phenyl radical - is halogen, methoxy, ethyl or propyl,
- $R^2$ is ($C_1$-$C_4$-alkoxy)-carbonyl in the 6-position in the phenyl radical and
- n is 1,

and, in all cases $a_1$)-$a_4$),
- $R^3$ is hydrogen, saturated or unsaturated $C_1$-$C_8$-alkyl or $C_1$-$C_4$-alkoxy,
- $R^4$ and $R^5$ independently of one another are hydrogen, halogen, $C_1$-$C_4$-alkyl, $C_1$-$C_4$-alkoxy, $C_1$-$C_4$-alkylthio, the three last-mentioned radicals being unsubstituted or substituted by halogen, $C_1$-$C_4$-alkoxy or $C_1$-$C_4$-alkylthio,
- Y is O or S and

E is CH or N,

in combination with

B) one or more compound(s) from the group comprising the compounds

B1) pyrazosulfuron-ethyl (NC 311) of the formula

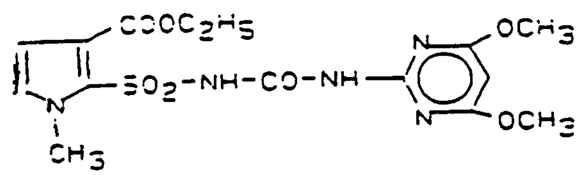

(B1)

B2) bensulfuron-methyl of the formula

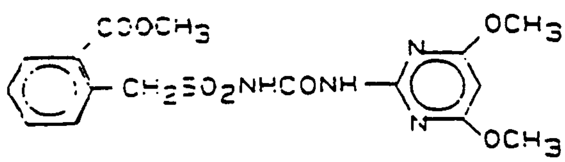

(B2)

B3) amidosulfuron of the formula

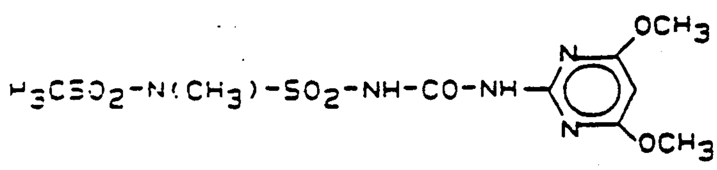

(B3)

B4) imazosulfuron (TH 913) of the formula

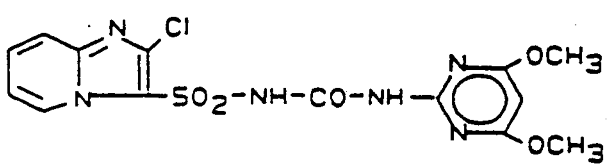

(B4)

B5) dimetrasulfuron (cinosulfuron) of the formula

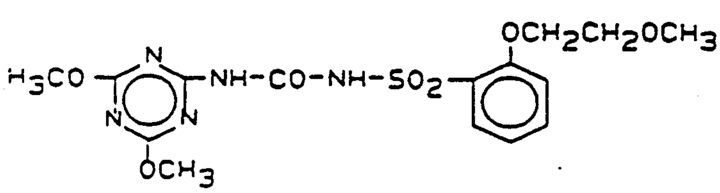

(B5)

B6) metsulfuron-methyl (DPX-T 6376) of the formula

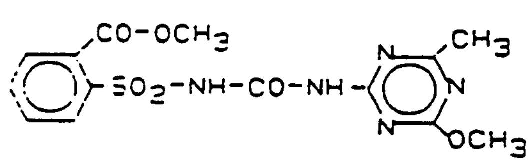

(B6).

for weed control.

**2.** The use as claimed in claim 1, wherein, in the compounds of the formula (I) or salts thereof,

$a_1$)

$R^1$ is ethoxy, propoxy or isopropoxy and

$R^2$ is in the 6-position and has the above-mentioned meaning, and

n is 0 or 1, or

$a_2$)

$R^1$ is optionally unsaturated $C_1$-$C_4$-alkoxy which is substituted by halogen, $C_1$-$C_4$-alkoxy, $C_1$-$C_4$-alkylthio or -sulfinyl or -sulfonyl, ($C_1$-$C_4$-alkoxy)-carbonyl, $NO_2$, CN or phenyl; furthermore $C_2$-$C_5$-alkenyloxy or $C_2$-$C_4$-alkynyloxy, and

$R^2$ is $C_1$-$C_4$-alkyl, $C_2$-$C_5$-alkenyl, ($C_1$-$C_4$-alkoxy)-carbonyl, $C_1$-$C_4$-alkoxy or $C_1$-$C_4$-alkylthio, each of which can be substituted as indicated above, or is halogen, and

n is 0 or 1, or

$a_3$)

$R^1$ is methoxy, ethyl or propyl and

$R^2$ is 6-methoxycarbonyl or 6-ethoxycarbonyl and

n is 1, and,

in all cases $a_1$) - $a_3$),

$R^3$ is hydrogen, $C_1$-$C_4$-alkyl,

$R^4$ and $R^5$ are halogen, $C_1$-$C_4$-alkyl, $C_1$-$C_4$-alkoxy or $C_1$-$C_4$-alkylthio, the 3 last-mentioned radicals being unsubstituted or substituted by halogen, $C_1$-$C_4$-alkoxy or $C_1$-$C_4$-alkylthio,

Y is O or S and

E is CH or N.

**3.** The use as claimed in claim 1 or 2, wherein one or more compounds of the formulae A1, A2 and A3 or salts thereof

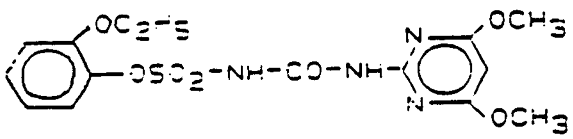

(A1)

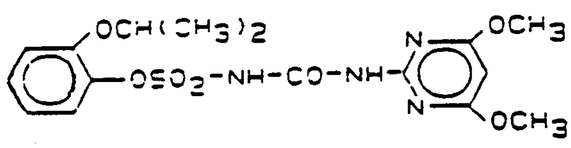

(A2)

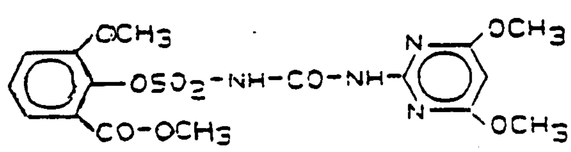

(A3)

are used.

**4.** The use as claimed in claim 1, 2 or 3, wherein 0.1 to 99% by weight of active substances A and B together with 1 to 99.9% by weight of customary formulation auxiliaries are used.

**5.** The use as claimed in one of claims 1 to 4, wherein the active substances A and B are used in a ratio by weight of 1:0.1 to 1:10.

**6.** The use as claimed in one of claims 1 to 5 for selective weed control in crops of useful plants.

**7.** A process for the preparation of a herbicidal composition which contains one or more compounds A and one or more compounds B as defined in claims 1 to 3, which comprises formulating one or more compounds A with one or more compounds B analogously to a conventional formulation for crop

protection agents from the group-comprising wettable powders, emulsifiable concentrates, agueous solutions, emulsions, sprayable solutions (tank mix), dispersions on an oil or water base, suspoemulsions, dusts, seed-dressing agents, granules for soil application or for broadcasting, water-dispersible granules, ULV formulations, microcapsules and waxes.

**8.** A method of controlling undesirable plants, which comprises applying to these plants or their areas of cultivation a herbicidally effective amount of a combination of active substances A + B defined in one or more of claims 1 to 5.

**9.** The method as claimed in claim 8, wherein weeds in crops of useful plants are controlled selectively.

**10.** The method as claimed in claim 9, wherein the crop of useful plants is one from amongst the group comprising wheat, barley, corn and rice.

**Revendications**

**Revendications pour les Etats contractants suivants : AT, CH, DE, DK, FR, GB, IT, LI, NL**

**1.** Produits herbicides caractérisés en ce qu'ils contiennent, en une quantité efficace et synergique,

A) des composés de formule générale (I) ou leurs sels

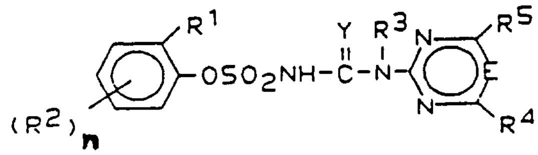

(I)

dans lesquels

$a_1$) $R^1$ est un radical éthoxy, propoxy ou isopropoxy, et

$R^2$ est un halogène, $NO_2$, $CF_3$, CN, un radical alkyle en $C_1$-$C_4$, alcoxy en $C_1$-$C_4$, alkylthio en $C_1$-$C_4$ ou (alcoxy en $C_1$-$C_4$)-carbonyle, et

n vaut 0, 1, 2 ou 3, ou bien

$a_2$) $R^1$ est un radical alcoxy en $C_1$-$C_8$ éventuellement insaturé, substitué par un halogène, un substituant alcoxy en $C_1$-$C_6$ éventuellement insaturé, un résidu de formule (alkyle en $C_1$-$C_6$)-S-, (alkyle en $C_1$-$C_6$)-SO-, (alkyle en $C_1$-$C_6$)-$SO_2$-, (alkyle en $C_1$-$C_6$)-O-CO-, $NO_2$, CN ou phényle ; ou encore un radical alcényloxy ou alcynyloxy en $C_2$-$C_8$, et

$R^2$ est un radical alkyle en $C_1$-$C_8$ saturé ou insaturé, phényle, phénoxy, alcoxy en $C_1$-$C_4$, alkylthio en $C_1$-$C_4$, (alcoxy en $C_1$-$C_4$)-carbonyle, tous les radicaux $R^2$ ci-dessus pouvant être substitués par des substituants halogéno, alcoxy en $C_1$-$C_4$ ou alkylthio en $C_1$-$C_4$, ou encore un radical halogéno, $NO_2$, alkylsulfonyle ou alkylsulfinyle en $C_1$-$C_4$, et

n vaut 0, 1, 2 ou 3, ou bien

$a_3$) $R^1$ est un radical alcoxy en $C_1$-$C_8$, et

$R^2$ est un radical alcényle ou alcynyle en $C_2$-$C_8$, phényle ou phénoxy, les radicaux mentionnés ci-dessus pour $R^2$ étant non substitués ou substitués par des substituants halogéno ou alcoxy ou alkylthio en $C_1$-$C_4$, ou encore alkylsulfonyle en $C_1$-$C_4$ ou alkylsulfinyle en $C_1$-$C_4$, et

n vaut 1, 2 ou 3, ou bien

$a_4$) $R^1$, toujours en position 2 du noyau phényle, est un radical halogéno, méthoxy, éthyle ou propyle,

$R^2$ est un radical (alcoxy en $C_1$-$C_4$)-carbonyle en position 6 du noyau phényle, et

n vaut 1,

et aussi, dans tous les cas $a_1$)-$a_4$) :

$R^3$ est un hydrogène, un radical alkyle en $C_1$-$C_8$ ou alcoxy en $C_1$-$C_4$ saturé ou insaturé,

$R^4$ et $R^5$, indépendamment l'un de l'autre, sont des hydrogènes ou des radicaux halogéno, alkyle en $C_1$-$C_4$, alcoxy en $C_1$-$C_4$, alkylthio en $C_1$-$C_4$, ces trois derniers radicaux étant non substitués ou substitués par des substituants halogéno, alcoxy en $C_1$-$C_4$ ou alkylthio en $C_1$-$C_4$,

Y est O ou S, et

E est CH ou N, en combinaison avec

B) un ou plusieurs composés choisis parmi l'ensemble contenant les composés suivants :

B1) Pyrazosulfuron-éthyl (NC 311) de formule

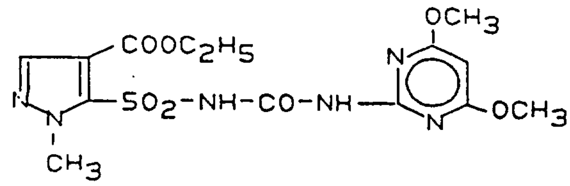

(B1)

B2) Bensulfuron-méthyl de formule

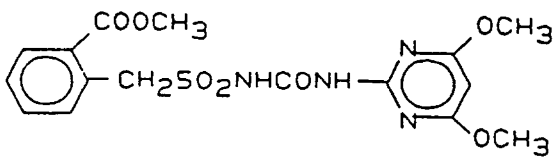

(B2)

B3) Amidosulfuron de formule

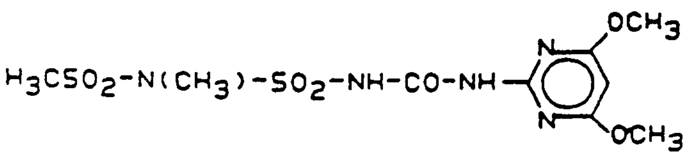

(B3)

B4) Imazosulfuron (TH 913) de formule

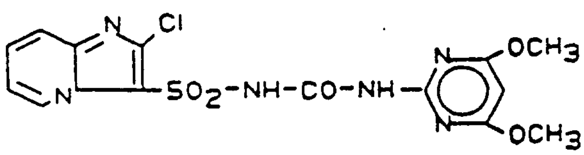

(B4)

B5) Dimétrasulfuron (Cinosulfuron) de formule

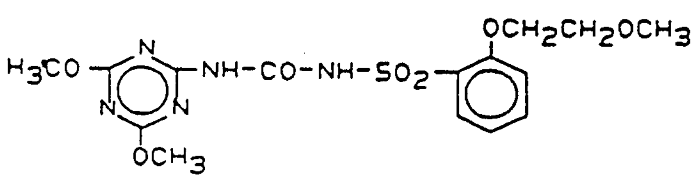

(B5)

et

B6) Metsulfuron-méthyl (DPX-T 6376) de formule

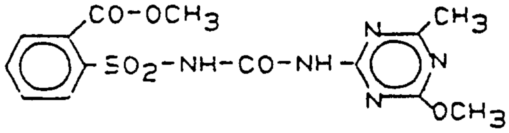

(B6)

2. Produit selon l'invention la revendication 1, caractérisé en ce qu'il contient des composés de formule (I) ou leurs sels, dans lesquels :
   $a_1$) $R^1$ est un radical éthoxy, propoxy ou isopropoxy, et
   $R^2$ est orienté en position 6 et a les significations données ci-dessus, et
   n vaut 0 ou 1, ou bien
   $a_2$) $R^1$ est un radical alcoxy en $C_1$-$C_4$ éventuellement insaturé, substitué par des substituants halogéno, alcoxy en $C_1$-$C_4$, alkylthio ou alkylsulfinyle ou alkylsulfonyle en $C_1$-$C_4$, (alcoxy en $C_1$-$C_4$)-carbonyle, $NO_2$, CN ou phényle ; et de plus un radical alcényloxy en $C_2$-$C_5$ ou alcynyloxy en $C_2$-$C_4$, et
   $R^2$ est un radical alkyle en $C_1$-$C_4$, alcényle en $C_2$-$C_5$, (alcoxy en $C_1$-$C_4$)-carbonyle, alcoxy en $C_1$-$C_4$ ou alkylthio en $C_1$-$C_4$, qui peuvent être substitués comme indiqué ci-dessus, ou encore halogéno, et
   n vaut 0 ou 1, ou bien
   $a_3$) $R^1$ est un radical méthoxy, éthyle ou propyle, et
   $R^2$ est un radical 6-méthoxycarbonyle ou 6-éthoxycarbonyle, et
   n vaut 1, et de même
   dans tous les cas $a_1$) - $a_3$)
   $R^3$ est un hydrogène ou un radical alkyle en $C_1$-$C_4$,
   $R^4$ et $R^5$ sont des radicaux halogéno, alkyle en $C_1$-$C_4$, alcoxy en $C_1$-$C_4$ ou alkylthio en $C_1$-$C_4$, ces trois derniers radicaux étant non substitués, ou étant substitués par des substituants halogéno, alcoxy en $C_1$-$C_4$ ou alkylthio en $C_1$-$C_4$,
   Y est O ou S,
   E est CH ou N.

3. Produits selon la revendication 1 ou 2, caractérisés en ce qu'ils contiennent un ou plusieurs composés de formules A1, A2 et A3, ou leurs sels

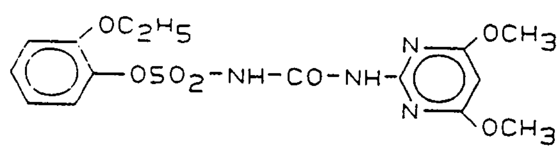
(A1)

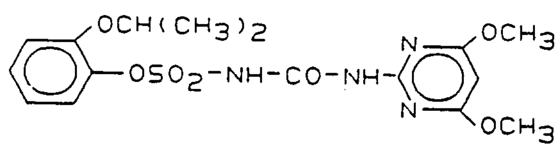
(A2)

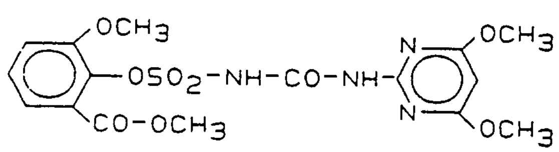
(A3)
.

4. Produits selon l'une ou plusieurs des revendications 1 à 3, caractérisés en ce que, outre les auxiliaires de formulation usuels, ils contiennent de 0,1 à 99 % en poids des matières actives A et B.

5. Produits selon l'une ou plusieurs des revendications 1 à 4, caractérisés en ce qu'ils contiennent les matières actives A et B selon un rapport pondéral de 1 : 0,1 à 1 : 10.

6. Procédé pour préparer un produit selon l'une ou plusieurs des revendications 1 à 5, caractérisé en ce qu'on formule un ou plusieurs composés A avec un ou plusieurs composés B, d'une manière analogue à une formulation usuelle de produits phytosanitaires choisie parmi l'ensemble comprenant les poudres mouillables, les concentrés émulsionnables, les solutions aqueuses, les émulsions, les solutions pulvérisables (mélange en cuve), les dispersions de type huileux ou aqueux, les émulsions en suspension, les poudres pour poudrage, les désinfectants, les granulés pour application sur le sol ou par répandage, les granulés dispersibles dans l'eau, les formulations ULV, les microcapsules et les cires.

**7.** Procédé pour maîtriser des végétaux indésirables, caractérisé en ce qu'on applique sur ces derniers ou sur leurs surfaces de culture une quantité à effet herbicide de l'une des combinaisons de matières actives A + B définies dans une ou plusieurs des revendications 1 à 5.

**8.** Procédé selon la revendication 7, caractérisé en ce qu'il porte sur la maîtrise sélective de mauvaises herbes dans des cultures de végétaux utiles.

**9.** Procédé selon la revendication 8, caractérisé en ce que la culture de plantes utiles est une culture choisie parmi l'ensemble comprenant le blé, l'orge, le maïs et le riz.

**10.** Utilisation des produits herbicides selon l'une ou plusieurs des revendications 1 à 5 pour la maîtrise sélective des mauvaises herbes dans les cultures de plantes utiles.

**Revendications pour l'Etat contractant suivant : ES**

**1.** Utilisation de combinaisons de matières actives herbicides et synergiques comprenant :
A) des composés de formule générale (I) ou leurs sels

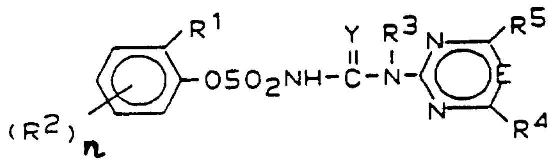

(I)

dans lesquels

$a_1$) $R^1$ est un radical éthoxy, propoxy ou isopropoxy, et
$R^2$ est un halogène, $NO_2$, $CF_3$, CN, un radical alkyle en $C_1$-$C_4$, alcoxy en $C_1$-$C_4$, alkylthio en $C_1$-$C_4$ ou (alcoxy en $C_1$-$C_4$)-carbonyle, et
n vaut 0, 1, 2 ou 3, ou bien

$a_2$) $R^1$ est un radical alcoxy en $C_1$-$C_8$ éventuellement insaturé, substitué par un halogène, un substituant alcoxy en $C_1$-$C_6$ éventuellement insaturé, un résidu de formule (alkyle en $C_1$-$C_6$)-S-, (alkyle en $C_1$-$C_6$)-SO-, (alkyle en $C_1$-$C_6$)-$SO_2$-, (alkyle en $C_1$-$C_6$)-O-CO-, $NO_2$, CN ou phényle ; ou encore un radical alcényloxy ou alcynyloxy en $C_2$-$C_8$, et
$R^2$ est un radical alkyle en $C_1$-$C_8$ saturé ou insaturé, phényle, phénoxy, alcoxy en $C_1$-$C_4$, alkylthio en $C_1$-$C_4$, (alcoxy en $C_1$-$C_4$)-carbonyle, tous les radicaux $R^2$ ci-dessus pouvant être substitués par des substituants halogéno, alcoxy en $C_1$-$C_4$ ou alkylthio en $C_1$-$C_4$, ou encore un radical halogéno, $NO_2$, alkylsulfonyle ou alkylsulfinyle en $C_1$-$C_4$, et
n vaut 0, 1, 2 ou 3, ou bien

$a_3$) $R^1$ est un radical alcoxy en $C_1$-$C_8$, et
$R^2$ est un radical alcényle ou alcynyle en $C_2$-$C_8$, phényle ou phénoxy, les radicaux mentionnés ci-dessus pour $R^2$ étant non substitués ou substitués par des substituants halogéno ou alcoxy ou alkylthio en $C_1$-$C_4$, ou encore alkylsulfonyle en $C_1$-$C_4$ ou alkylsulfinyle en $C_1$-$C_4$, et
n vaut 1, 2 ou 3, ou bien

$a_4$) $R^1$, toujours en position 2 du noyau phényle, est un radical halogéno, méthoxy, éthyle ou propyle,
$R^2$ est un radical (alcoxy en $C_1$-$C_4$)-carbonyle en position 6 du noyau phényle, et
n vaut 1,

et aussi, dans tous les cas $a_1$)-$a_4$) :

$R^3$ est un hydrogène, un radical alkyle en $C_1$-$C_8$ ou alcoxy en $C_1$-$C_4$ saturé ou insaturé,

$R^4$ et $R^5$, indépendamment l'un de l'autre, sont des hydrogènes ou des radicaux halogéno, alkyle en $C_1$-$C_4$, alcoxy en $C_1$-$C_4$, alkylthio en $C_1$-$C_4$, ces trois derniers radicaux étant non substitués ou substitués par des substituants halogéno, alcoxy en $C_1$-$C_4$ ou alkylthio en $C_1$-$C_4$,

Y est O ou S, et

E est CH ou N,

en combinaison avec

B) un ou plusieurs composés choisis parmi l'ensemble contenant les composés suivants :

B1) Pyrazosulfuron-éthyl (NC 311) de formule

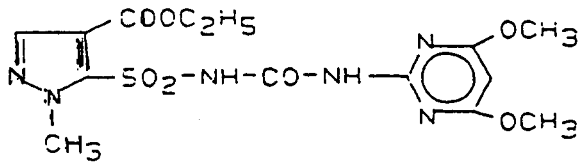

(B1)

B2) Bensulfuron-méthyl de formule

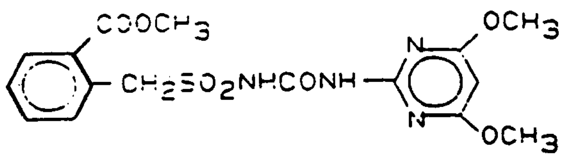

(B2)

B3) Amidosulfuron de formule

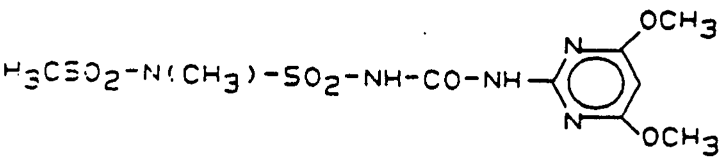

(B3)

B4) Imazosulfuron (TH 913) de formule

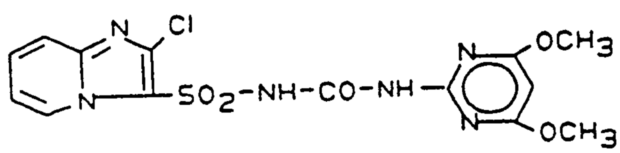

(B4)

B5) Dimétrasulfuron (Cinosulfuron) de formule

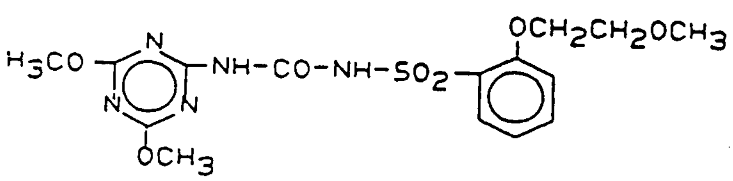

(B5)

et

B6) Metsulfuron-méthyl (DPX-T 6376) de formule

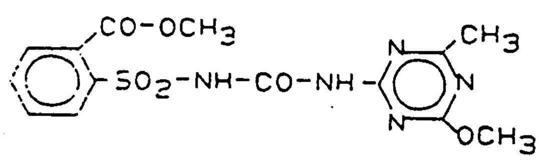

(B6)

pour la maîtrise des mauvaises herbes.

2. Utilisation selon la revendication 1, caractérisée en ce que, dans les composés de formule (I) ou leurs sels,
   $a_1$) $R^1$ est un radical éthoxy, propoxy ou isopropoxy, et
   $R^2$ est orienté en position 6 et a les significations données ci-dessus, et
   n vaut 0 ou 1, ou bien
   $a_2$) $R^1$ est un radical alcoxy en $C_1$-$C_4$ éventuellement insaturé, substitué par des substituants halogéno, alcoxy en $C_1$-$C_4$, alkylthio ou alkylsulfinyle ou alkylsulfonyle en $C_1$-$C_4$, (alcoxy en $C_1$-$C_4$)-carbonyle, $NO_2$, CN ou phényle ; et de plus un radical alcényloxy en $C_2$-$C_5$ ou alcynyloxy en $C_2$-$C_4$, et
   $R^2$ est un radical alkyle en $C_1$-$C_4$, alcényle en $C_2$-$C_5$, (alcoxy en $C_1$-$C_4$)-carbonyle, alcoxy en $C_1$-$C_4$ ou alkylthio en $C_1$-$C_4$, qui peuvent être substitués comme indiqué ci-dessus, ou encore halogéno, et
   n vaut 0 ou 1, ou bien
   $a_3$) $R^1$ est un radical méthoxy, éthyle ou propyle, et
   $R^2$ est un radical 6-méthoxycarbonyle ou 6-éthoxycarbonyle, et
   n vaut 1, et de même
   dans tous les cas $a_1$) - $a_3$)
   $R^3$ est un hydrogène ou un radical alkyle en $C_1$-$C_4$,
   $R^4$ et $R^5$ sont des radicaux halogéno, alkyle en $C_1$-$C_4$, alcoxy en $C_1$-$C_4$ ou alkylthio en $C_1$-$C_4$, ces trois derniers radicaux étant non substitués, ou étant substitués par des substituants halogéno, alcoxy en $C_1$-$C_4$ ou alkylthio en $C_1$-$C_4$,
   Y est O ou S,
   E est CH ou N.

3. Utilisation selon la revendication 1 ou 2, caractérisée en ce qu'on utilise un ou plusieurs composés de formule A1, A2 et A3 ou leurs sels.

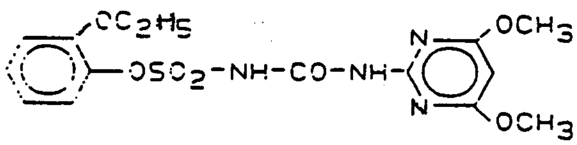

(A1)

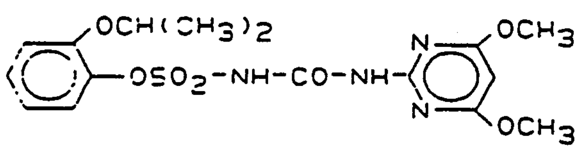

(A2)

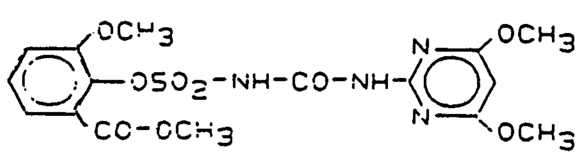

(A3)

4. Utilisation selon la revendication 1, 2 ou 3, caractérisée en ce qu'on utilise de 0,1 à 99 % en poids des matières actives A et a en même temps que 1 à 99,9 % en poids d'auxiliaires de formulation usuels.

5. Utilisation selon l'une des revendications 1 à 4, caractérisée en ce qu'on utilise les matières actives A et B selon un rapport pondéral de 1 : 0,1 à 1 : 10.

6. Utilisation selon l'une des revendications 1 à 5, pour la maîtrise sélective des mauvaises herbes dans les cultures de plantes utiles.

7. Procédé pour préparer un produit herbicide qui contient un ou plusieurs composés A et un ou plusieurs composés B, définis dans les revendications 1 à 3, caractérisé en ce qu'on formule un ou plusieurs

composés A avec un ou plusieurs composés B, d'une manière analogue à une formulation usuelle de produits phytosanitaires choisie parmi l'ensemble comprenant les poudres mouillables, les concentrés émulsionnables, les solutions aqueuses, les émulsions, les solutions pulvérisables (mélange en cuve), les dispersions de type huileux ou aqueux, les émulsions en suspension, les poudres pour poudrage, les désinfectants, les granulés pour application sur le sol ou par répandage, les granulés dispersibles dans l'eau, les formulations ULV, les microcapsules et les cires.

**8.** Procédé pour maîtriser des végétaux indésirables, caractérisé en ce qu'on applique sur ces derniers ou sur leurs surfaces de culture une quantité à effet herbicide de l'une des combinaisons de matières actives A + B définies dans une ou plusieurs des revendications 1 à 5.

**9.** Procédé selon la revendication 8, caractérisé en ce qu'il porte sur la maîtrise sélective de mauvaises herbes dans des cultures de végétaux utiles.

**10.** Procédé selon la revendication 9, caractérisé en ce que la culture de plantes utiles est une culture choisie parmi l'ensemble comprenant le blé, l'orge, le maïs et le riz.